# EUROPÄISCHE PATENTSCHRIFT

(11) **EP 3 980 580 B1**
(45) Veröffentlichungstag und Bekanntmachung des Hinweises auf die Patenterteilung: **01.04.2026**
(21) Anmeldenummer: 20730069.0
(22) Anmeldetag: 08.06.2020
(51) Int. Cl.: C25B 1/04, C25B 9/23

(54) **ELEKTRISCH LEITFÄHIGE NANOFASERN FÜR EINE POLYMERMEMBRAN-BASIERTE ELEKTROLYSE**
ELECTRICALLY CONDUCTIVE NANOFIBERS FOR A POLYMER MEMBRANE BASED ELECTROLYSIS
NANO-FIBRES ÉLECTRO-CONDUCTRICES POUR UNE ÉLECTROLYSE À BASE DE MEMBRANE POLYMÈRE

(30) Priorität: 07.06.2019 DE 102019115469; 02.09.2019 EP 19194885
(43) Veröffentlichungstag der Anmeldung: 13.04.2022
(73) Patentinhaber: Hahn-Schickard-Gesellschaft für angewandte Forschung e. V., 70569 Stuttgart (DE)
(72) Erfinder: HEGGE, Friedemann, 79106 Freiburg (DE); BREITWIESER, Matthias, 79102 Freiburg (DE); LOMBECK, Florian, 79102 Freiburg (DE); VIERRATH, Severin, 79097 Freiburg (DE)
(74) Vertreter: Hertin und Partner Rechts- und Patentanwälte PartG mbB
(86) Internationale Anmeldenummer: PCT/EP2020/065814
(87) Internationale Veröffentlichungsnummer: WO 2020/245454

(56) Entgegenhaltungen:
- WO-A1-2015/092371
- KR-A- 20190 021 551
- US-A1- 2006 078 784
- US-A1- 2012 251 924
- US-A1- 2017 244 109

## Beschreibung

Die Erfindung betrifft eine Elektrolysezelle zur Erzeugung von Wasserstoff und Sauerstoff mit einem Schichtsystem umfassend mindestens ein Paar katalytisch aktiver Schichten zwischen welchen eine Polymermembran angeordnet vorliegt, wobei das Schichtsystem elektrisch leitfähige keramische oder metallische Nanofasern umfasst. Dabei umfasst das Schichtsystem ein Paar katalytisch aktiver Schichten, sowie anodennahe und/oder kathodennahe Transportschichten, wobei das Paar katalytisch aktiver Schichten katalytisch aktive Nanopartikel umfasst und wobei zur Erhöhung einer Querleitfähigkeit bzw. Kontaktierung der katalytisch aktiven Nanopartikel zwischen einer der katalytisch aktiven Schichten und einer der Transportschicht eine Zwischenschicht umfassend keramische oder metallische Nanofaser vorliegt oder innerhalb einer der katalytisch aktiven Schichten zusätzlich zu den katalytisch aktiven Nanopartikeln metallische oder keramische Nanofasern vorliegen. Die Nanofasern können dabei selbst katalytisch aktiv oder katalytisch inaktiv sein.

### Hintergrund der Erfindung und Stand der Technik

Die Erfindung betrifft das Gebiet der Elektrolyse mittels Polymermembranen. Bei der Elektrolyse wird Wasserstoff und Sauerstoff aus Wasser mittels elektrischer Energie erzeugt. Vorrichtungen zur Elektrolyse mit Polymermembran bestehen in der Regel aus einer zentralen Polymermembran und zu beiden Seiten Katalysatorschichten, welche als Anode bzw. Kathoden fungieren, sowie Transportschichten und Flussfeldern. Derartige Vorrichtungen werden auch als Elektrolyseur bezeichnet. Die Membran hat die Funktion, die entstehenden Gase zu separieren und elektrisch zu isolieren. In den Katalysatorschichten finden die chemischen Reaktionen statt, d.h. dort entstehen die Gase. Über die Transportschichten wird Wasser zugeführt, außerdem werden Gase abtransportiert und die Katalysatorschichten elektrisch mit den Flussfeldern kontaktiert. Die Transportschichten können auch als Gasdiffusionslagen bezeichnet werden.

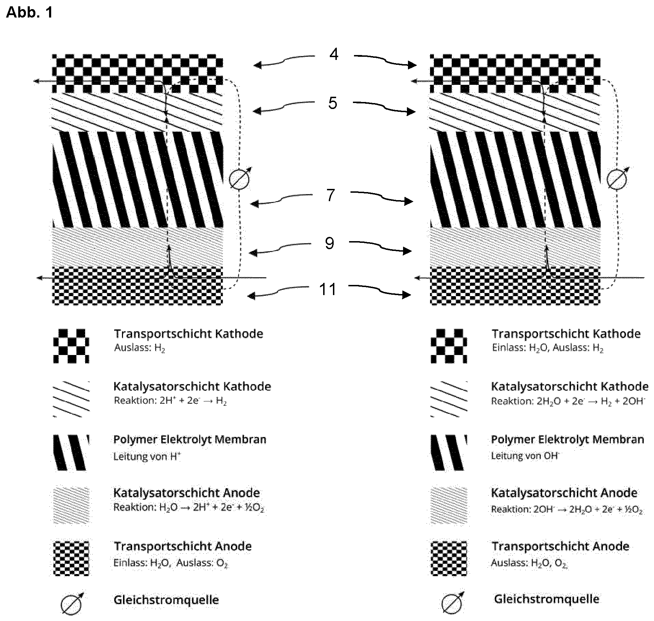

In der "sauren" Elektrolyse (Abbildung 1 links) werden Protonen als Ladungsträger durch die Membran migriert. Die Polymermembran besteht aus einem protonenleitfähigen Polymer, z.B. Perfluorsulfonsäure (PFSA). Die saure Elektrolyse wird auch als PEM-Elektrolyse (mit einer *proton exchange membrane* oder *polymer electrolyte membran* PEM) bezeichnet. Die Katalysatorschichten bestehen üblicherweise aus Nanopartikeln, z.B. IrOₓ oder IrRuOₓ auf der Anodenseite und Platin auf Kohlenstoff auf der Kathodenseite, sowie jeweils einem protonenleitfähigen Polymer (z.B. PFSA) als Binder. Die Transportschichten sind üblicherweise ein Titanvlies, Titansintermetall oder Titanstreckgitter (Anodenseite) und ein Kohlenstoff-Faser-Gelege auf der Kathodenseite.

In der alkalischen Elektrolyse (Abbildung 1 rechts) werden Hydroxid-Ionen als Ladungsträger durch die Membran migriert. Die Polymermembran besteht aus einem anionleitfähigen Polymer, z.B. Hexamethyl-p-terphenyl poly(benzimidazolium) (*HMT-PMBI*)*.* Eine alkalische Elektrolyse mit einer Polymermembran, wird auch als AnionenAustausch-Membran-Elektrolyse oder AEM-Elektrolyse (AEM: *anion exchange membrane*) bezeichnet. Die Katalysatorschichten bestehen üblicherweise aus Nickellegierungen auf der Anodenseite und Platin auf Kohlenstoff auf der Kathodenseite. Die Transportschichten sind üblicherweise ein Nickelschaum (Anodenseite) und ein Kohlenstoff-Faser-Gelege (Kathodenseite).

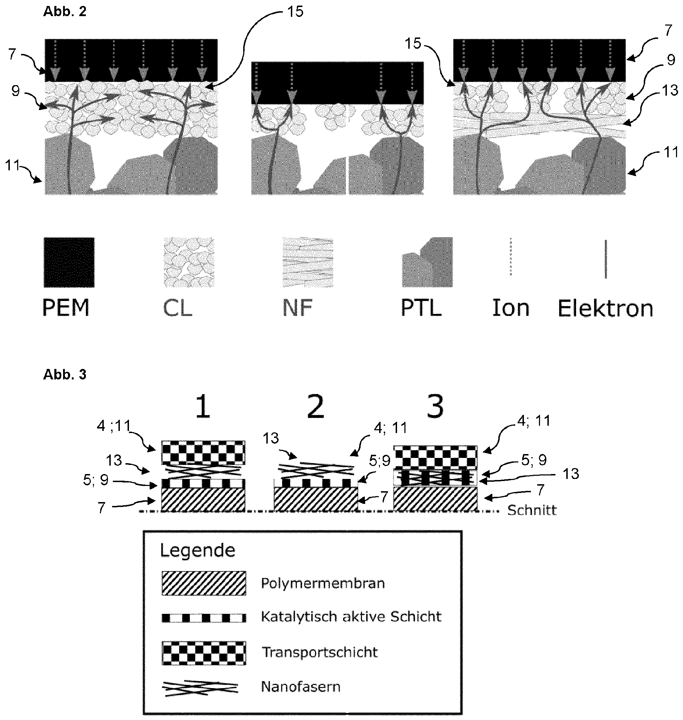

Die Elektrolyse erfolgt unter Anlegen einer Gleichstromspannung mittels sogenannter Flussfelder, welche im einfachsten Fall durch zwei Endplatten gebildet werden. Die in Abbildung 1 und 2 schematisch dargestellte Einzelzelle führt in wiederholter Anordnung zu einem Zellstapel, einem Elektrolysezellen-Stack. Hierbei werden die einzelnen Elektrolysezellen zwischen Bipolarplatten angeordnet, welche die Flussfelder bilden. Typischerweise ist der Stack in zwei Endplatten eingefasst, an welchen eine Spannung angelegt werden kann. Die Leistungsaufnahme des Stacks steigt dabei in Abhängigkeit mit der Zellanzahl (Zellspannung) und der aktiven Zellfläche (Zellstrom).

Eine Herausforderung bei der polymermembran-basierten Elektrolyse ist die Reduzierung der Katalysatorbeladung im Hinblick auf eine Kommerzialisierung im größeren Maßstab.

Die Katalysatorschichten bestehen üblicherweise aus Nanopartikeln, welche aufgrund einer Oberflächenvergrößerung eine erhöhte Aktivität aufweisen.

Da Katalysatorträgermaterialien in einer korrosiven Anode entweder nicht stabil oder schwierig herzustellen und zu verarbeiten sind, sind reine Katalysatoranoden sehr verbreitet. Daher werden hohe Katalysatorbeladungen benötigt, um eine ausreichend große aktive Oberfläche bereitzustellen und eine hohe Leistung zu erzielen. Wenn die Beladung katalytisch aktiven Materials verringert wird, trägt ein unzureichender elektrischer Kontakt des Katalysatormaterials wesentlich zur Überspannung bei. Dies liegt an der schlechten Elektronenleitfähigkeit in der Ebene der Katalysatorschicht zwischen den Kontaktpunkten mit der porösen Transportschicht (Abbildung 2; Polonský, et al. J Appl. Electrochem 47 (2017) 1137-1146, M. Bernt, et al. J. Electrochem. Soc. 165 (2018) F305-F314.)

Es wurde gezeigt, dass eine mikroporöse Schicht (MPL) zwischen katalytischer Schicht (CL) und einer Transportschicht (dem *porous transport layer* (PTL)) die Elektronenleitung in der Ebene und den ohmschen Grenzflächenwiderstand verbessern kann. MPLs, hergestellt z.B. durch Vakuumplasmaspritzen (Lettenmeier, et al. J. Power Sources 311 (2016) 153-158.) zeigen eine Leistungssteigerung, sind aber teurer.

Alia et al. haben die Verwendung von Iridium-Nickel und Iridium-Cobalt Nanofasern zur Bildung von katalytisch aktiven Schichten vorgeschlagen und berichten über Leistungssteigerungen (Alia, S. M.; Shulda, S.; Ngo, C.; Pylypenko, S.; Pivovar, B. S. Iridium-Based Nanowires as Highly Active, Oxygen Evolution Reaction Electrocatalysts. ACS Catal. 2018, 8, 2111-2120). Nanofasern haben gegenüber Nanopartikeln jedoch den Nachteil, dass sie eine geringere Oberfläche besitzen, da Nanopartikel feiner dispergiert werden können und aufgrund ihrer kugelähnlichen Form eine höhere spezifische Oberfläche aufweisen. Da die katalytische Aktivität direkt von der Oberfläche abhängt, hat die vorgeschlagene Lösung in Bezug auf eine Steigerung der katalytischen Aktivität Verbesserungspotential.

Im Stand der Technik ist zudem die Verwendung von kohlenstoffbasierten Nanofasern bekannt.

US 2012/251924 A1 offenbart eine PEM Elektrolysezelle mit einer aktiven Schicht, umfassend Fullerene und Metalle als Katalysatoren. Durch Bereitstellung eines *carbon electronic conductor* ohne Fullerene soll die Leistung gesteigert werden. Bevorzugt handelt es sich bei dem *carbon electronic conductor* um kolloidale Kohlenstoffpartikel, wie beispielsweise "Carbon Black". In einer Ausführungsform wird jedoch auch die Verwendung von Kohlenstoff-Nanofasern vorgeschlagen.

US 2017/244109 A1 beschreibt einen Katalysator, insbesondere für die Sauerstoffentwicklung (*oxygen evolution reaction,* OER) umfassend Partikel aus Iridiumoxid und einem Metalloxid, z.B. Titan-, Tantal-, Niob- oder Maganoxid. Eine bevorzugte Verwendung betrifft Brennstoffzellen (PFMFC), welche neben dem Katalysator einen Elektrokatalysator, z.B. aus Platin, umfassen kann. In einer Ausführungsform wird vorgeschlagen, dass der Elektrokatalysator durch einen Träger aus Kohlenstoff-Nanofasern gestützt werden kann.

WO 2015/092371 A1 betrifft eine Katalysatorschicht umfassend einen protonleitenden Polymer, eine Platin-enthaltenden Elektrokatalysator, einen OER Elektrokatalysator sowie kohlenstoffhaltiges Material. Das kohlenstoffhaltige Material ist bevorzugt leitfähig und korrosionsbeständig. In einer Ausführungsform liegt dieses als Kohlenstoff-Nanofasern vor.

US 2006/078784 A1 beschreibt ein Gasdiffusionselektrode für Elektrolysezellen umfassend eine Träger- bzw. Transportschicht eine Polster- bzw. Zwischenschicht und eine Katalysatorschicht. In der Polster- bzw. Zwischenschicht können kohlenstoffbasierte Nanofasern eingebracht. Hierdurch sollen insbesondere mikroskopische Irregularitäten des Träger- bzw. Transportschicht ausgeglichen werden, welcher beispielsweise ein Gewebe bzw. Papier mit Kohlenstofffasern umfasst.

Nachteilig an der Verwendung von kohlenstoffbasierten Nanofasern ist deren geringe Beständigkeit bei starken elektrischen Feldern bzw. hohen Spannungen. Während beispielsweise bei der US 2012/251924 A1 und US 2017/244109 A1 Kohlenstoff-Nanofaser im Kontext der Bereitstellung von Brennstoffzellen durchaus zu Leistungssteigerungen in der Lage sind, ist deren Einsatz in Elektrolysezellen nicht in jedem Falle vorteilhaft. Insbesondere bei sauren Elektrolysezellen treten beispielsweise anodenseitig sehr hohe Spannungen auf, welche zu einer Zerstörung der kohlenstoffbasierten Nanofasern führen.

KR 2019 0021551 betrifft einen Ansatz zur Optimierung eines Gasdiffusionselektrode bzw. PTE (*Porous transport electrode*) basierten Aufbau. In der KR 2019 0021551 wird eine Membran-Elektrodeneinheit (MEA) mit einer Polymerelektroden-Membran (PEM) beschrieben, welche zwischen einem Paar katalytisch aktiver Schichten vorliegt. KR 2019 0021551 schlägt vor zwischen die katalytisch aktiven Schichten und den Transportschichten eine Zwischenschicht aus Nanofasern einzubringen. Die Nanofasern werden aus Titanoxid gebildet und mittels Elektrospin-Verfahren als eine Nanofasermatter unmittelbar auf mikroporöse Gastransportschichten aufgetragen. Im Anschluss erfolgt eine thermische Behandlung (Calcinieren). Ziel der Aufbringung der Nanofasern ist es auf den mikroporösen Gastransportschichten mittels einer dichten Nanofasermatte eine homogene Oberfläche, ohne Löcher zu schaffen, um eine Katalysatordeposition zu optimieren und den Verlust von Katalysatormaterial bei direktem Aufbringen auf die Gastransportschicht zu vermeiden. Die vorgeschlagene Einbringung von Nanofasern ist spezifisch auf die Verbesserung der Oberflächeneigenschaften mikroporöser Gastransportschichten beschränkt und nicht ohne Weiteres auf anderen Schichtaufbauten übertragbar. Insbesondere kann die thermische Behandlung (Calcinieren) der Nanofasern auf der Gastransportschicht nur erfolgen, da die mikroporösen Gastransportschichten gegenüber einer derartigen thermischen Behandlung stabil sind. Ein Aufbringen der Nanofasern mittels Elektrospin-Verfahren auf eine katalytisch aktive Schicht, welche sich bereits auf der Polymermembran befindet, und anschließende thermische Behandlung (Calcinieren) würde hingegen die Polymermembran zerstören.

Im Lichte des Standes der Technik besteht somit ein Bedarf an neuartigen polymermembran-basierten Elektrolysezellen bzw. Verfahren zu deren Herstellung, welche höhere Leistungen bei geringer Katalysatorbeladung erlauben sich durch Beständigkeit auszeichnen und flexible Schichtaufbauten mittels einfacher Prozessierung ermöglichen.

### Zusammenfassung der Erfindung

Eine Aufgabe der Erfindung war die Bereitstellung polymermembran-basierter Elektrolysezellen bzw. Verfahren zu deren Herstellung, welche die Nachteile des Standes der Technik beseitigen. Insbesondere war eine Aufgabe die Bereitstellung polymermembran-basierten Elektrolysezellen, welche trotz geringerer Katalysatorbeladung eine hohe Leistung aufweisen und sich darüber hinaus durch hohe Stabilität, Beständigkeit und geringe Herstellungskosten aufgrund einfacher Prozessierung auszeichnen.

Die Aufgabe wird durch die unabhängigen Patentansprüche 1 und 11-14 gelöst. Die abhängigen Patentansprüche stellen bevorzugte Ausführungsformen dar.

In einem Aspekt betrifft die Erfindung eine Elektrolysezelle zur Erzeugung von Wasserstoff und Sauerstoff einem Schichtsystem umfassend mindestens ein Paar katalytisch aktiver Schichten zwischen welchen eine Polymembran angeordnet vorliegt, wobei das Schichtsystem folgende Schichten umfasst
- ein Paar katalytisch aktiver Schichten zur Bildung einer Anode und einer Kathode,
- eine anodennahe und/oder eine kathodennahe Transportschicht,

wobei das Paar katalytisch aktiver Schichten katalytisch aktive Nanopartikel umfasst und wobei zur Verbesserung einer Kontaktierung der katalytisch aktiven Nanopartikel:
   i) zwischen einer der katalytisch aktiven Schichten und einer Transportschicht eine Zwischenschicht umfassend elektrisch leitfähige Nanofaser vorliegt oder
   ii) innerhalb einer der katalytisch aktiven Schichten zusätzlich zu den katalytisch aktiven Nanopartikeln elektrisch leitfähige Nanofasern vorliegen,
und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht wurden.

Erfindungsgemäß handelt es sich um metallische oder keramische Nanofasern, wobei das Paar katalytisch aktiver Schicht katalytisch aktive Nanopartikel umfasst und die keramischen oder metallischen Nanofasern zur Verbesserung der Kontaktierung der katalytisch aktiven Nanopartikel bzw. der Erhöhung der Querleitfähigkeit der katalytisch aktiven Schicht bzw. des Schichtverbunds aus katalytisch aktiver Schicht und Zwischenschicht eingebracht werden.

Die Erhöhung der Querleitfähigkeit (*in plane conductivity*) meint bevorzugt eine Erhöhung der elektrischen Kontaktierung (*connectivity*) der katalytisch aktiven Nanopartikel, um die Querleitfähigkeit innerhalb der Ebene der katalytisch aktiven Schicht bzw. innerhalb eines Schichtverbundes aus katalytisch aktiver Schicht und Zwischenschicht zu erhöhen. Darüber hinaus können die Nanofasern den Kontaktwiderstand zwischen Transportschicht und Katalysatorschicht verringern und den Massentransportwiderstand durch eine Erhöhung der Porosität weiter verringern.

Bevorzugt umfasst das Schichtsystem folgende Schichten:
- eine kathodennahe Transportschicht
- eine erste katalytisch aktive Schicht zur Bildung einer Kathode
- eine Polymermembran
- eine zweite katalytisch aktive Schicht zur Bildung einer Anode
- eine anodennahe Transportschicht,
wobei besonders bevorzugt der Schichtaufbau in der genannten Reihenfolge erfolgt wobei die erste und/oder zweite katalytische aktive Schicht katalytisch aktive Nanopartikel umfasst zwischen einer der katalytisch aktiven Schichten und einer Transportschicht eine Zwischenschicht umfassend elektrisch leitfähige Nanofasern vorliegt, mindestens eine der katalytisch aktiven Schichten eine Mischung aus katalytisch aktiven Nanopartikeln und elektrisch leitfähigen Nanofasern aufweist und/oder eine der Transportschichten elektrisch leitfähige Nanofasern umfasst. Bevorzugt handelt es sich um elektrisch leitfähige keramische oder metallische Nanofasern, welche zur Erhöhung einer Querleitfähigkeit bzw. Verbesserung der elektrischen Kontaktierung der katalytisch aktiven Nanopartikel führen.

Die Erfinder haben erkannt, dass unter Verwendung von elektrisch leitfähigen Nanofasern für die Schichten einer Elektrolysezelle überraschend hohe Leistungssteigerungen erreicht werden können, bei gleichzeitig geringer Katalysatorbeladung. Bei Verwendung von metallischen oder keramischen Nanofasern kann vorteilhaft eine hohe elektrische Leitfähigkeit mit einer hohen Beständigkeit, selbst bei starken elektrischen Feldern erzielt werden.

Die Vorteile der leitfähigen Nanofasern, können bevorzugt bei unterschiedlichen Konfigurationen auftreten:
Die Abbildung 3 zeigt beispielhaft besonders bevorzugte Konfigurationen zur Bildung bzw. Ersetzung von Schichten eines Schichtsystems mittels Nanofasern. Die Nanofasern können hierbei katalytisch aktiv oder katalytisch nicht-aktiv sein. Folgende Konfigurationen können beispielhaft bevorzugt sein:
Konfiguration 1 zeigt, eine bevorzugte Ausführungsform, in welcher die elektrisch leitfähigen Nanofaser eine Zwischenschicht zwischen einer katalytisch aktiven Schicht und einer Transportschicht bilden.

Bevorzugt wird die katalytisch aktive Schicht von Nanopartikeln gebildet, welche vorzugsweise aus einem katalytisch aktiven Material bestehen. Typischerweise können die Nanopartikel einen Durchmesser von 1 nm - 1000 nm aufweisen. Derartige Nanopartikel, beispielsweise Iridium(IV)oxid Partikel, sind kommerziell erhältlich und können durch Rolle zu Rolle fähige Verfahren, beispielsweise mittels Sprühbeschichtung (engl. Spraycoating), Schlitzdüsenbeschichtung (engl. Slot-Die-Coating, oder Vorhangsbeschichtung (engl. Curtain coating) unter Verwendung einer Dispersion auf die Polymermembran aufgetragen werden. Aufgrund der Bereitstellung einer vergrößerten Oberfläche führen die Nanopartikel zu einer intrinsischen hohen Aktivität.

Erfindungsgemäß wurde erkannt, dass durch eine Kombination einer katalytisch aktiven Schicht, insbesondere auf Basis von Nanopartikeln, mit elektrisch leitfähigen Nanofasern, bevorzugt metallischen oder keramischen Nanofasern, überraschend hohe Leistungssteigerungen zu verzeichnen sind. So führen die Nanofasern zu einer deutlichen Steigerung der Querleitfähigkeit, d.h. einer lateralen Leitfähigkeit innerhalb der Schicht. Hierdurch kann eine ausgezeichnete Leitfähigkeit zwischen einer Transportschicht und der katalytisch aktiven Schicht gewährleistet werden, sodass selbst bei geringer Beladung ein ausreichender elektrischer Kontakt des Katalysatormaterials vorliegt und Überspannung vermieden werden. Hierbei ist es möglich, dass das gesamte (kostenintensive) katalytisch aktive Material in Form von Nanopartikeln vorliegt. Für die Nanofasern kann ein nichtkatalytisches (kostengünstigeres) Material verwendet, sodass die Nanofasern katalytisch inaktiv sind, aber aufgrund ihrer Leitfähigkeit eine Kontaktierung *connectivity*) der Nanopartikel erhöhen. Alternativ kann es ebenso bevorzugt sein, dass ein Teil des katalytisch aktiven Materials als Nanopartikel und ein Teil des katalytisch-aktiven Materials als Nanofasern vorliegen. Wie die experimentellen Daten zeigen, führt die Verwendung einer strukturellen Mischform aus Nanopartikeln (mit hoher spezifischer Oberfläche) und Nanofasern (zur Gewährleistung der Querleitfähigkeit) zu überraschend guten Ergebnissen. Zudem erhöht das Einbringen einer Zwischenschicht umfassend Nanofasern, bevorzugt metallischen oder keramischen Nanofasern, die Stabilität der Elektrolysezelle, wodurch Effizienzminderungen mit steigendem Produktalter deutlich reduziert werden. Eine hohe Porosität der Nanofasern erleichtern weiterhin den Massentransport und führen zu einer zusätzlichen Effizienzsteigerung. Auch können die Nanofasern den Kontaktwiderstand zwischen Transportschicht und Katalysatorschicht verringern.

Überraschenderweise konnte festgestellt werden, dass die beschriebenen Vorteile ebenfalls auftreten, wenn anstatt einer zusätzlichen Zwischenschicht, die katalytische Schicht aus einer Mischung von Nanofasern und Nanopartikeln gebildet wird. D.h. in dieser Ausführungsform wird die Nanofaser nicht als separate Schicht auf die katalytisch aktiven Nanopartikel aufgetragen, sondern zusätzlich zu den katalytisch aktiven Nanopartikeln unmittelbar in die katalytisch aktive Schicht eingebracht.

Vorteilhaft können die obig beschriebenen Vorteile hinsichtlich der Erhöhung einer Querleitfähigkeit und Leistungssteigerung (bzw. der Möglichkeit der Reduktion des kostenintensiven katalytischen Materials bei gleichbleibender Leistung) sowohl mit einer Zwischenschicht aus Nanofasern auf Nanopartikeln (Konfiguration 1, Abb. 3) als auch durch das zusätzliche Einbringen von Nanofasern in eine katalytisch aktiven Schicht mit den Nanopartikeln erreicht werden (Konfiguration 3, Abb. 3).

Konfiguration 3 (Abbildung 3) zeigt eine bevorzugte Ausführungsform, in welcher mindestens eine der katalytisch aktiven Schichten eine Mischung aus katalytisch aktiven Nanopartikeln und Nanofasern umfasst. In der Ausführungsform ist die katalytisch aktive Schicht somit durch zwei strukturelle Bestandteile gekennzeichnet. Zum einen umfasst die Schicht Nanopartikel, welche im Wesentlichen kugelförmig bzw. eine Sphärizität von mehr als 0,5, vorzugsweise 0,7 oder mehr als 0,9 aufweisen. Zum anderen weist die katalytische aktive Schicht Nanofasern auf, welche durch eine Stabform und hohen Aspektverhältnissen von mehr als 5, bevorzugt mehr als 10, mehr als 100 gekennzeichnet sind. Die Kombination von Nanofasern und Nanopartikeln führt zu synergistischen Effekten, welche der Fachmann nicht erwarten konnte.

So führen die Nanopartikel eingebettet in die Nanofasern zu einer stark erhöhten Gesamtaktivität, wobei zu Oberflächenvergrößerung in Kombination mit einer erhöhten Querleitfähigkeit ausgezeichnete Gesamtaktivitäten, selbst bei sehr niedrigen Beladungen aufweist. Somit kann auch für gering beladene und sehr dünne katalytisch aktive Schichten eine gute elektrische Kontaktierung des katalytischen Materials gewährleistet werden. Wie die Beispiele zeigen, kann mit einer Mischschicht aus Nanofasern und Nanopartikeln bei einer Gesamtbeladung von lediglich 0.2 mg_{Ir} / cm² (Milligramm Iridium pro Quadratzentimeter) eine ähnlich hohe Effizienz erreicht werden, wie bei Verwendung der sechsfachen Beladung von 1.2 mg_{Ir}/cm² im Falle einer herkömmlichen katalytisch aktiven Schicht, welche ausschließlich aus Nanopartikeln besteht.

Besonders gute Ergebnisse konnten mit einem Mischungsverhältnis von Nanofaser zu Nanopartikel von 0,25:1 bis 4:1, besonders bevorzugt von 0,5:1 bis 2:1 erzielt werden. Hierbei bezieht sich das Mischungsverhältnis bevorzugt auf die Gewichtsanteile der Nanopartikel bzw. Nanofasern. Besonders bevorzugt ist zudem eine homogene statische Verteilung von Nanopartikeln und Nanofasern innerhalb der Schicht, wofür es beispielsweise bevorzugt sein kann, die Nanopartikel und Nanofasern vor dem Auftragen als katalytisch aktive Schicht zu mischen. Alternativ können Nanopartikel und Nanofasern auch sukzessiv alternierend übereinander aufgetragen werden, um eine katalytisch aktive Schicht zu bilden.

In beiden Konfigurationen bzw. Ausführungsformen bestehen die Nanopartikel vorzugsweise aus katalytisch aktivem Material. Die Nanofasern können ebenfalls aus katalytisch aktivem Material bestehen oder aber mit einem solchen beschichtet sein. Eine Leistungssteigerung ist aber insbesondere ebenso mit Nanofasern zu verzeichnen, welche aus einem nicht katalytisch aktiven Material gebildet wurden. Hierzu trägt insbesondere deren Beitrag zur Erhöhung einer Querleitfähigkeit innerhalb der katalytischen aktiven Schicht bei.

Beiden Konfigurationen ist somit gemein, dass durch Einbringung der Nanofasern die Quervernetzung bzw. elektrische Kontaktierung der katalytisch aktiven Nanopartikel erhöht wird.

Wie im Folgenden noch im Detail erläutert, kann vorteilhaft eine Prozessierung der Nanofasern als Dispersion erfolgen, sodass verschiedene Beschichtungsverfahren zum Einsatz kommen können, welche auf einem Auftragen einer flüssigen Dispersion (bzw. Tinte) basieren. Dispersion meint bevorzugt ein heterogenes Gemisch aus den (bevorzugt zerkleinerten) Nanofasern als disperse Phase und einem flüssigen Dispersionsmedium. Durch die mögliche Prozessierung als Dispersion bzw. Tine können eine Reihe von Beschichtungsverfahren zum verwandt werden, wozu insbesondere Rolle zu Rolle fähige Verfahren gehören, wie beispielsweise Sprühbeschichtung (engl. Spraycoating), Schlitzdüsenbeschichtung (engl. Slot-Die-Coating, oder Vorhangsbeschichtung (engl. Curtain coating). Insbesondere Letztgenannte stellen massentaugliche Industrieverfahren dar, sodass die Einbringung der erfindungsgemäßen Nanofasern auf einfache Weise in bestehende Industrieprozesse zur Bereitstellung von Elektrolysezellen implementiert werden kann.

Darüber hinaus besteht ein hoher Grad an Flexibilität in Bezug auf die Einbringung der Nanofasern ins Schichtsystem zur Verbesserung der Kontaktierung der Nanopartikel.

Vorteilhaft können die Nanofasern insbesondere sowohl zusammen mit den Nanopartikel als eine Mischung aufgebracht werden, als auch separat von diesen als eine zusätzliche Zwischenschicht.

Konfiguration 2 in der Abbildung 1 illustriert eine weitere Ausführungsform, bei welcher eine der Transportschichten elektrisch leitfähige Nanofaser umfasst. Bevorzugt handelt es sich um keramische oder metallische Nanofasern. Die Transportschichten dienen der Zufuhr von Wasser und dem Abtransport der entstehenden Gase (Sauerstoff und Wasserstoff) sowie der elektrischen Kontaktierung der Katalysatorschichten. In der Regel umfassen anodenseitige Transportschichten beispielsweise Titanverbindungen, während kathodenseitige Transportverbindungen auf Kohlenstoffverbindungen aufbauen.

Die Verwendung von elektrisch leitfähigen Nanofasern für eine Transportschicht führt vorteilhafterweise ebenfalls zu einer erhöhten Querleitfähigkeit, wodurch eine Effizienzsteigerung bewirkt wird. Der Begriff Querleitfähigkeit (*in plane conductivity*) bezeichnet bevorzugt insbesondere ob (und ggf. wie gut) das Katalysatormaterial mit einer Stromseite verbunden ist. Eine Erhöhung der Querleitfähigkeit kann daher auch als Erhöhung der Kontaktierung bzw. Konnektierung (*connectivity*) des katalytisch aktiven Materials, insbesondere von Nanopartikeln, zu einer Stromseite (anoden- oder kathodenseitig) verstanden werden.

In bevorzugten Ausführungsformen kann die Transportschicht ausschließlich aus Nanofasern gebildet werden. Zu diesem Zweck kann es bevorzugt sein, für anodenseitige Transportschichten Nanofasern aus Titanverbindungen zu verwenden, während kathodenseitig kohlenstoffbasierte Nanofasern bevorzugt zum Einsatz kommen können. Vorteilhafterweise können mit derartigen Transportschichten sowohl eine effizientere Zufuhr von Wasser und Abtransport der entstehenden Gase (Sauerstoff und Wasserstoff) erreicht, als auch eine besonders effiziente elektrischen Kontaktierung von Katalysatorschichten (beispielsweise umfassend Nanopartikel) gewährleistet werden.

Im Sinne der Erfindung bezeichnet der Begriff "Nano" bevorzugt Strukturen mit einer charakteristischen Ausdehnung im Bereich von Nanometern.

"Nanofasern" werden im Allgemeinen als Fasern mit einem Faserdurchmesser im Nanometerbereich verstanden, bevorzugt mit einem Durchmesser von etwa 10 bis etwa 1000 nm, bevorzugt von mehr als 10 nm und weniger als 1000 nm.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Die Nanofasern weisen einen Durchmesser von 10 nm -1000 nm, vorzugsweise 50 nm - 400nmm auf. Auch Zwischenbereiche aus den vorgenannten Bereichen können bevorzugt seien wie beispielsweise 10 bis 20 nm, 20 bis 50 nm, 50 nm bis 100 nm, 100 nm bis 200 nm, 200 nm bis 300 nm, 300 nm bis 400 nm, 400 nm bis 500 nm, 600 nm bis 700 nm, 700 nm bis 800 nm, 800 nm bis 900 nm, 900 nm bis 1000 nm. Ein Fachmann erkennt, dass die vorgenannten Bereichsgrenzen auch kombiniert werden können, um weitere bevorzugte Bereich zu erhalten, wie beispielsweise 50 nm bis 300 nm, 200 nm bis 800 µm oder auch 100 nm bis 400 nm.

Faser meint bevorzugt ein lineares dünnes Gebilde, dessen Querschnittsdimension klein im Vergleich zur Länge ist. Das Verhältnis von Querschnittsdimension zur Länge wird bevorzugt als Aspektverhältnis bezeichnet. Im Falle einer Nanofaser entspricht das Aspektverhältnis bevorzugt dem Verhältnis von Durchmesser zur Länge.

Die Nanofasern weisen ein Aspektverhältnis von 5-1000, vorzugsweise 10-100 auf. Auch Zwischenbereiche aus den vorgenannten Bereichen können bevorzugt seien wie beispielsweise 5 bis 10, 10 bis 20, 20 bis 30, 30 bis 40, 40 bis 50, 50 bis 80, 80 bis 100, 100 bis 200, 200 bis 300, 300 bis 400, 400 bis 500, 600 bis 700, 700 bis 800, 800 bis 900, 900 bis 1000. Ein Fachmann erkennt, dass die vorgenannten Bereichsgrenzen auch kombiniert werden können, um weitere bevorzugte Bereich zu erhalten, wie beispielsweise 10 bis 40, 30 bis 80 oder auch 200 bis 700.

Die vorgenannten Dimensionierungen für die Nanofasern führen zu einer besonders ausgeprägten Steigerung der Effizienz und Erhöhung der Stabilität einer aufgetragenen Schicht.

Besonders bevorzugt weisen die Nanofasern eine Länge von weniger als 20 µm, bevorzugt weniger als 10 µm auf. Beispielsweise können Längen im Bereich von 2 µm bis 10 µm bevorzugt sein. Hierzu können die Nanofasern durch einen geeigneten Prozess wie bspw. einer Behandlung mit Ultraschall oder mechanischer Scherung in einer Kugelmühle in kürzere Stücke zerkleinert werden. Die kürzeren Stücke mit einer Länge von weniger als 20 µm, bevorzugt weniger als 10 µm können auch bevorzugt als "Nanostäbchen" bezeichnet werden.

Gegenüber längeren Nanofasern, welche beispielsweise als Gewebe vorliegen, können die kürzeren Stücke (Nanostäbchen bzw. englisch *nanorod*) deutlich einfacher prozessiert werden. Beispielsweise können die Nanostäbchen als ein Pulver bereitgestellt werden, welches als Dispersion (bzw. als Tinte) einfach und günstig mittels gängiger Beschichtungsprozesse aufgetragen werden kann.

Die Nanofasern sind elektrisch leitfähig. Die elektrische Leitfähigkeit bezeichnet bevorzugt die Fähigkeit eines Materials elektrischen Strom zu leiten. Typischerweise wird die elektrische Leitfähigkeit durch σ abgekürzt und hat die Einheit (Siemens pro Meter). Besonders bevorzugt bestehen die keramischen oder metallischen Nanofasern aus einem Material mit einer Leitfähigkeit von mehr als 10 S/m, bevorzugt mehr als 10², 10³, 10⁴, 10⁵ oder mehr 10⁶ S/m. Bevorzugt sind die Nanofasern aus elektrisch leitfähiger Keramik oder einem Metall. Keramische Werkstoffe sind anorganische, nicht-metallisch und polykristallin. Der Begriff der Keramik umfasst insbesondere auch technische Keramiken, Oxid-Keramiken, beispielsweise Metalloxiden sowie Nicht-Oxid-Keramiken, beispielsweise Carbiden, Nitriden, Boriden oder Siliciden.

Im Sinne der Erfindung bezeichnen keramische oder metallische Nanofasern bevorzugt Nanofasern aus Verbindungen mit einem überwiegenden Anteil an Metallen. Beispielsweise sind Verbindungen mit einem Metallanteil von mehr als 50 Gewichts-Prozenten (Gew.-%), mehr als 60 Gew.-%, 70 Gew.-%, 80 Gew.-% oder auch mehr als 90 Gew.-% bevorzugt.

Während es sich bei den metallischen Nanofasern bevorzugt um reine Metallverbindungen oder Legierungen handelt, sind keramische Nanofasern bevorzugt als Metallverbindungen gekennzeichnet, welche neben dem metallischen Anteil leichte Verbindungen wie Sauerstoff, Kohlenstoff oder Stickstoff aufweisen.

In beiden Fällen führt der metallische Anteil in den Nanofasern vorteilhaft sowohl zu einer elektrischen Leitfähigkeit, als auch zu einer erhöhten Beständigkeit bei starken elektrischen Feldern. Die metallischen oder keramischen Nanofasern erlauben somit eine verbesserte Langlebigkeit der Elektrolysezellen im Gegensatz zu den im Stand der Technik beschriebenen Kohlenstoff-Nanofasern.

Im Sinne der Erfindung meint "Nanopartikel" ein Partikel im Nanometerbereich, wobei die größte Ausdehnung der Nanopartikel in einem Bereich 1 nm bis 1000 nm, bevorzugt von 1 nm oder mehr und weniger als 1000 nm, besonders bevorzugt von etwa 1 bis 300 nm liegt.

In einer bevorzugten Ausführungsform der Erfindung weisen die Nanopartikel eine maximale Ausdehnung von 10 nm - 1000 nm auf, bevorzugt von 20 nm bis 500 nm. Auch Zwischenbereiche aus den vorgenannten Bereichen können bevorzugt seien wie beispielsweise 10 bis 20 nm, 20 bis 50 nm, 50 nm bis 100 nm, 100 nm bis 200 nm, 200 nm bis 300 nm, 300 nm bis 400 nm, 400 nm bis 500 nm, 600 nm bis 700 nm, 700 nm bis 800 nm, 800 nm bis 900 nm, 900 nm bis 1000 nm. Ein Fachmann erkennt, dass die vorgenannten Bereichsgrenzen auch kombiniert werden können, um weitere bevorzugte Bereich zu erhalten, wie beispielsweise 10 nm bis 100 nm, 50 nm bis 400 nm oder auch 200 nm bis 500 nm.

Die Nanopartikel weisen eine Sphärizität von mehr als 0,5, vorzugsweise mehr als 0,7 oder mehr als 0,9 auf. Die Sphärizität Körpers entspricht bevorzugt den Verhältnis der Oberfläche einer Kugel gleichen Volumens zur Oberfläche des Körpers. Eine Kugel hat mithin eine Sphärizität von 1, während ein Würfel beispielsweise eine Sphärizität von ca. 0,8 aufweist. Für die vorgenannten Sphärizitäten weisen die Nanopartikel eine gesteigerte Oberfläche im Verhältnis zu deren Volumina auf, was sich positiv auf deren katalytische Aktivität niederschlägt.

Die Kombination der Nanopartikel mit Nanofasern (sowohl als Zwischenschicht als auch eingebettet in die katalytische Schicht) erlaubt eine besondere Leistungssteigerung. Dabei führt die Oberflächenvergrößerung (aufgrund der sphärischen Nanopartikel) zusammen mit einer erhöhten Querleitfähigkeit (aufgrund der länglichen Nanofasern) zu einer ausgezeichnete Gesamtaktivität, selbst bei sehr niedrigen Beladungen. Somit kann auch für gering beladene und sehr dünne katalytisch aktive Schichten eine gute elektrische Kontaktierung des katalytischen Materials gewährleistet werden
In einer bevorzugten Ausführungsform wurde eine Beladung der katalytisch aktiven Schicht mit katalytisch aktiven Material in einem Bereich gewählt, welcher bei Bereitstellung der metallischen oder keramischen Nanofasern eine ausreichende Querleitfähigkeit zum Betrieb der Elektrolysezelle gewährleistet und ohne Bereitstellung der metallischen oder keramischen Nanofasern keine ausreichende Querleitfähigkeit zum Betrieb der Elektrolysezelle gewährleistet.

Vorteilhaft kann durch die Erhöhung der Querleitfähigkeit bzw. Verbesserung der Kontaktierung zwischen den katalytisch aktiven Nanopartikeln mittels der Nanofasern die Beladung mit katalytischem Material reduziert werden. In der Regel handelt es sich bei dem katalytisch aktiven Material, um kostenintensives Material, beispielsweise um ein Edelmetall, besonders bevorzugte Edelmetalle sind Platinmetalle, wozu Ruthenium (Ru), Rhodium (Rh), Palladium (Pd), Osmium (Os), Iridium (Ir) und Platin (Pt) gehören. Um eine wirtschaftlich effiziente Nutzung der Elektrolysezellen zu ermöglichen, sollte der Anteil an dem katalytisch aktiven Material soweit wie möglich reduziert werden. Eine untere Grenze ist durch die Leistungsfähigkeit gegeben, welche einen sinnvollen Betrieb gewährleistet. Insbesondere führt eine zu geringe Beladung mit katalytisch aktivem Material zu einer verminderten Querleitfähigkeit bzw. Kontaktierung und somit zu einem Leistungsabfall, sodass ein sinnvoller Betrieb der Elektrolysezelle nicht möglich ist.

Die Erfinder haben erkannt, dass durch die Einbringung der metallischen oder keramischen Nanofasern die erforderliche Mindestmenge an katalytischem Material drastisch um einen Faktor von mehr als 2, bevorzugt mehr als 5 reduziert werden kann. Bei unverminderter Leistung kann durch das erzielte Kostenersparnis somit eine besonders wirtschaftliche Lösung bereitgestellt werden.

In einer bevorzugten Ausführungsform ist die Elektrolysezelle durch eine Gesamtbeladung mit einem katalytisch aktiven Material von 0.5 mg/ cm² (Milligramm katalytisch aktives Material pro Quadratzentimeter) oder weniger, bevorzugt 0.4 mg/ cm², 0.3 mg/ cm² oder 0.2 mg/ cm² oder weniger gekennzeichnet. Die Gesamtbeladung bezieht sich bevorzugt auf eine kathodenseitige oder anodenseitige Beladung mit katalytisch aktivem Material. Hierbei wird das katalytische Material sowohl für die katalytisch aktiven Nanopartikel, als auch für die Nanofasern berücksichtigt, sofern die Nanofasern katalytisch aktives Material umfassen. Besonders bevorzugt und vorteilhaft ist eine derartig geringe Gesamtbeladung mit Katalysatormaterial anodenseitig für eine saure PEM-Elektrolysezelle möglich.

Als katalytisch aktives Material sind anodenseitig für eine saure PEM-Elektrolysezelle insbesondere Edelmetalle, wie die Platinmetalle z.B. Iridium, Ruthenium oder Platin, bevorzugt. Derart geringe Beladungen mit Edelmetallen sind mit Verfahren des Standes der Technik ohne Verwendung der erfindungsgemäßen Nanofasern nicht möglich, ohne das starke Leistungseinbußen zu verzeichnen sind, welche einen sinnvollen Betrieb der Elektrolysezellen verhindern.

Die Herstellung der Nanofasern und Einbringung der Nanofasern kann mittels unterschiedlicher Verfahren erfolgen.

Die Nanofasern können beispielsweise mittels Spinnprozessen und thermischer Nachbehandlung hergestellt werden. Geeignete Verfahren zur Herstellung von Nanofasern sind beispielsweise elektrochemische Abscheidungsverfahren wie *template assisted electrodeposition,* oder Spinnprozesse wie Elektrospinning, zentrifugales Spinning und Solution-Blow-Spinning.

Im ersten Schritt wird eine Lösung bestehend aus einem Trägerpolymer und einer oder mehrerer Metallvorstufen-Verbindung einer gewünschten Keramik hergestellt. Als Metallvorstufen-Verbindung wird üblicherweise ein Salz oder eine Koordinationsverbindung verwendet, aber auch Nanopartikel der gewünschten Keramik oder Keramik-Vorstufen sind möglich. Bei dotierten Keramiken oder Mischkeramiken werden mehrere Metall(vorstufen)-Verbindungen in Lösung gebracht. Zur Herstellung von metallischen Nanofasern, wird bevorzugt eine Lösung mit Metallen beispielsweise auch in Form von Nanopartikeln mit einem Trägerpolymer bereitgestellt.

Trägerpolymer meint bevorzugt einen "Polymer", wobei der Zusatz "Träger" kennzeichnet, dass im Herstellungsprozess das Polymer nach erfolgreicher Herstellung der Nanofaserstruktur von den Nanofasern bevorzugt entfernt wird. Polymer umfasst bevorzugt Homopolymere, wie Copolymere, wie z.B. Block-, Pfropf-, Zufalls- und alternierende Copolymere, Terpolymere usw., sowie Mischungen und Modifikationen davon, und ist nicht darauf beschränkt. Polymere für ein Trägerpolymer können unter anderem Polylactide, Polymilchsäure, Polyolefine, Polyacrylnitril, Polyurethan, Polycarbonat, Polycaprolacton, Polyvinylalkohol (PVA), Cellulose, Chitosan-Nylon (z.B. Nylon 6, Nylon 406, Nylon 6-6, etc.), Polystyrol, Proteine und dergleichen oder Kombinationen davon beinhalten. Sofern nicht ausdrücklich anders angegeben, umfasst der Begriff alle möglichen geometrischen Konfigurationen des Materials. Diese Konfigurationen beinhalten, sind aber nicht beschränkt auf isotaktische, syndiotaktische und zufällige Symmetrien. Geeignete Lösungsmittel für jedes Trägerpolymer können aus den Lösungsmitteln ausgewählt werden, die den Fachleuten bekannt sind, einschließlich, aber nicht beschränkt auf, Schwefelsäure, Chloroform, Tetrahydrofuran, Dimethylformamid, Wasser, Aceton und Kombinationen davon. Wie hierin verwendet, bezieht sich die Polymermischungen oder Polymerblend auf Kombinationen verschiedener Arten und Mengen von Polymeren sowie Mischungen (Blend) von Polymeren mit anderen Materialien. Besonders bevorzugte Trägerpolymere sind Polyvinylpyrrolidon (PVP), Polyvinylalkohol (PVA) oder auch Cellulose.

Im darauffolgenden Elektrospinning-Prozess werden aus dem gelösten Material Nanofasern (i.d.R. ein Nanofaser-Gelege) hergestellt, indem die Lösung in ein elektrisches Feld gebracht wird. Dies geschieht i.d.R. durch die Injektion der Lösung mit einer Spritze in das elektrische Feld. Die Feldstärke beträgt üblicherweise 10-30kV. Die Nanofasern weisen, je nach Prozessierung (Lösungsmittel, Konzentration der Lösung, angelegte Spannung, Flussrate, etc.) und Materialzusammensetzung, einen mittleren Nanofaserdurchmesser von 150nm - 1500nm auf.

Elektrospinnen bezieht sich bevorzugt auf eine Technologie, die nanometergroße Fasern aus einer Lösung herstellt, die Wechselwirkungen zwischen der Strömungsdynamik und geladenen Oberflächen nutzt. Im Allgemeinen beinhaltet die Bildung elektrogesponnener Fasern das Bereitstellen einer Lösung für eine Öffnung in einem Körper in elektrischer Verbindung mit einer Spannungsquelle, worin elektrische Kräfte helfen, feine Fasern zu bilden, die auf einer Oberfläche abgeschieden werden, die geerdet werden kann oder anderweitig bei einer niedrigeren Spannung als der Körper. Beim Elektrospinnen wird eine Trägerpolymerlösung zusammen mit einer oder mehrerer Metallvorstufen-Verbindung der gewünschten Keramik, die von einer oder mehreren Nadeln, Schlitzen oder anderen Öffnungen bereitgestellt wird, auf eine Hochspannung relativ zu einem Sammelgitter aufgeladen. Elektrische Kräfte überwinden die Oberflächenspannung und bewirken, dass sich ein feiner Strahl der Lösung in Richtung des geerdeten oder entgegengesetzt geladenen Sammelnetzes bewegt.

Der Strahl kann sich in noch feinere Faserströme ausbreiten, bevor er das Ziel erreicht, und wird als ein zusammenhängendes Netz aus kleinen Fasern gesammelt. Die getrockneten oder verfestigten Fasern können Durchmesser von etwa 10 nm bis 1000 nm aufweisen. Verschiedene Formen von elektrogesponnenen Nanofasern umfassen verzweigte Nanofasern, Röhren, Bänder und Spaltnanofasern, Nanofasergarne, oberflächenbeschichtete Nanofasern (z.B. mit Kohlenstoff, Metallen, etc.), im Vakuum hergestellte Nanofasern, etc. Die Herstellung von Nanofasern wird in verschiedenen Publikationen thematisiert, beispielsweise auch P.W. Gibson et al, "Electrospun Fiber Mats: Transport Properties," AlChE Journal, 45(1): 190-195 (January 1999), welches hierin durch Verweis aufgenommen wird.

Im dritten Schritt wird das Nanofaser-Material thermisch und/oder chemisch nachbehandelt. In diesem Schritt wird das Trägerpolymer vollständig entfernt, beispielsweise durch erhöhte Temperatur und vollständiger Oxidation des Trägerpolymers zu Kohlenstoffdioxid und Wasser und ggf. Stickoxiden und Schwefeloxiden. Im selben Schritt wird das Metallsalz zum Metalloxid oxidiert. Dieses Metalloxid kann bereits die gewünschte Keramik darstellen. Als Metalle kommen bevorzugt alle Übergangsmetalle (Sc, Ti, V, Cr, Mn, Fe, Co, Ni, Cu, Zn, Zr, Nb, Mo, Ru, Rh, Hf, W, Re, Os, Ir) und Lanthanoide in Frage. Chemische Nachbehandlung erlaubt die Modifizierung der Keramiken zu Nitriden, Carbiden, Silikaten, Boraten, etc.

Die keramischen Nanofasern können im Anschluss durch einen geeigneten Prozess wie bspw. einer Behandlung mit Ultraschall oder mechanischer Scherung in der Kugelmühle in kürzere Stücke, sogenannte Nanostäbchen, zerkleinert werden. Hierdurch können die bevorzugten Aspektverhältnis der Nanostäbchen von 5-1000, vorzugsweise 5 - 250 oder 10-100 eingestellt werden. Besonders bevorzugt können hierdurch Nanofasern mit einer Länge von weniger als 20 µm, bevorzugt weniger als 10 µm erhalten werden. Dies führt zu einer vereinfachten Prozessierung aus Dispersion bspw. mittels Sprühbeschichtung und einer homogenen Verteilung der Nanostäbchen auf der beschichteten Oberfläche.

Die Nanostäbchen können anschließend mit einem Binderpolymer in einem Beschichtungsprozess auf ein geeignetes Substrat aufgetragen werden. Als Beschichtungsprozesse eignen sich beispielsweise Aufsprühen, thermischen Spritzen, bevorzugt einem Plasmaspritzen oder Vakuumplasmaspritzen, Sprühbeschichtung, Schlitzdüse, Rolle-zu-Rolle-Anlage, Rakeln und/oder Dropcasting erfolgt. Das Binderpolymer besteht aus einem ionenleitfähigen, elektrisch leitfähigen oder inerten Polymer oder einem Blend dieser, welches dazu dient, die Schicht mechanisch zu stabilisieren. Als Binderpolymere kommen bevorzugt PFSA und PTFE zum Einsatz.

Die metallischen oder keramischen Nanofasern werden somit mittels eines Spinnprozess als ein zusammenhängendes Netz von Nanofasern hergestellt, thermisch nachbehandelt, zur weitere Prozessierung als Dispersion zerkleinert und im Anschluss mittels eines Beschichtungsprozess, in das Schichtsystem eingebracht. Die Prozessierung der zerkleinerten Nanofasern, bzw. Nanostäbchen, in einem Beschichtungsprozess als Dispersion erlaubt eine besonders flexible Anwendung für verschiedenen Schichtaufbauten oder Herstellungsszenarien. Beispielsweise können die Nanostäbchen als Pulver bereitgestellt werden und erst später in einem Herstellungsprozess eingebracht werden. Dies ermöglicht insbesondere die Einbringung der Nanofasern mittels Beschichtungsverfahren, welche im industriellen Maßstab Anwendung finden, wozu insbesondere Rolle-zu-Rolle fähige Verfahren, wie Slot-Die-Coating oder Curtain coating zählen.

Zudem ist ein unmittelbares Auftragen auf einer Polymermembran durch den Beschichtungsprozess möglich. Derartige Anwendungsmöglichkeiten sind durch den in der KR 2019 0021551 beschriebenen Ansatz nicht gegeben, da dieser ein unmittelbaren Elektrospinning eines Nanofaser-Gewebes auf einer mikroporöse Gastransportschicht vorsieht.

Für die Herstellung der Nanofasern können bevorzugt unterschiedliche Materialien verwandt werden. Bevorzugte Materialien sind beispielsweise Metalloxide oder Metallnitride.

Die Nanofasern können zusätzlich eine chemische Reaktion begünstigen und somit katalytisch aktiv sein. Die keramischen Nanofasern können mit katalytisch aktiven Nanopartikeln oder einer Dünnschicht bestehend aus katalytisch aktivem Material beschichtet sein.

Eine katalytisch aktive Schicht meint bevorzugt eine Schicht umfassend ein katalytisch aktives Material, welche elektrokatalytische Eigenschaften in Bezug auf die Freisetzung von Sauerstoff für die Anodenseite bzw. Wasserstoff für die Kathodenseite aufweist. Zur Bildung von katalytisch aktiven Schichten kann die Polymermembran unmittelbar mit Edelmetallelektroden und deren Oxiden als Elektrokatalysatoren (z.B. Platin, Iridium, Iridiumdioxid (IrO₂), Rhodium, Rhodiumoxid (RhO₂) beschichtet werden. Alternativ können die Elektrokatalysatoren auf den Transportschichten aufgetragen werden.

Als reine Schichten aus katalytisch aktivem Material können die katalytisch aktiven Schichten die Anoden bzw. Kathoden bilden. Es kann auch bevorzugt sein, dass das katalytisch aktive Material auf Trägermaterialien beispielweise aus Kohlenstoff oder Edelmetallelektroden aufgetragen werden
Für die saure PEM-Wasserelektrolyse ist beispielsweise Iridium bekannt für seine ausgeprägten elektrokatalytischen Eigenschaften in Bezug auf Prozesse zur Freisetzung von Sauerstoff. Daher kann Iridium als katalytisch aktives Material ein bevorzugtes Material für die Sauerstoffentwicklungsreaktion (*oxygen evolution reaction,* OER) an der Anodenseite eingesetzt werden. Hierbei kann es bevorzugt sein, dass Iridium in der Form des reinen Metalls oder auch als Oxid (IrO₂), ggf. in Mischung mit anderen Oxiden oder anderen Metallen vorliegt.

Darüber hinaus wurde insbesondere für Ruthenium (Ru), Palladium(Pd), Rhodium (Rh), Platin (Pt), Gold (Au) und Niob (Nb) bzw. deren Oxide elektrisch katalytische Eigenschaften für eine OER festgestellt. Von den vorgenannten Metallen zeichnen sich neben Iridiumoxiden auch Rutheniumoxide aus, sodass IrO₂ oder RuO₂ sowie Kompositverbindungen davon als Materialien für eine anodenseitige katalytisch aktive Schicht bevorzugt sind.

In einer bevorzugten Ausführungsform umfasst eine (anodenseitige) katalytisch aktive Schicht ein katalytisch aktives Material, welches eine Platinmetall-haltige, bevorzugt eine Iridium-haltige oder Ruthenium-haltige Verbindung umfasst, wobei die Verbindung bevorzugt Iridiumoxide und/oder Rutheniumoxide enhält, und wobei neben Iridium oder Ruthenium der Verbindung auch weitere Elemente wie beispielsweise Zinn, Antimon, Vanadium, Nickel, Cobalt zugesetzt sein können. In besonders bevorzugten Ausführungsformen umfasst eine (anodenseitige) katalytisch aktive Schicht IrO₂, RuO₂, IrRuOₓ, IrCoOₓ, IrNiOₓ und/oder IrSnSbVOₓ.

Die vorgenannten Materialien sind insbesondere für eine anodenseitige katalytisch aktive Schicht im Falle einer sauren PEM-Elektrolysezelle geeignet.

Kathodenseitig ist für die saure PEM-Wasserelektrolyse beispielsweise Platin (Pt) ein besonders aktiver Elektrokatalysator für die Reaktion zur Freisetzung des Wasserstoffs (*hydrogen evolution reaction* HER). Bevorzugt wird beispielsweise Platin auf Kohlenstoff für die Kathode eingesetzt. Darüber hinaus zeigen insbesondere auch Palladium(Pd), Rhodium (Rh), Iridium (Ir), Rhenium (Re), Osmium (Os), Ruthenium (Ru) oder Nickel (Ni) bzw. deren Oxide eine elektrokatalytische Aktivität zur Erzeugung von Wasserstoff, sodass sich diese Verbindungen für eine kathodenseitige katalytisch aktive Schicht eignen.

In einer bevorzugten Ausführungsform umfasst eine (kathodenseitige) katalytisch aktive Schicht ein katalytisch aktives Material, welches eine Platin (Pt), Palladium(Pd), Rhodium (Rh), Iridium (Ir), Rhenium (Re),Osmium (Os), Ruthenium (Ru) oder Nickel (Ni) enthaltende Verbindung umfasst, wobei die Verbindung bevorzugt deren Oxide enthält. Die katalytisch aktiven Materialien können beispielsweise auf Kohlenstoff aufgetragen vorliegen und mit der Polymembran verbunden werden.

Die vorgenannten Materialien sind insbesondere für eine kathodenseitige katalytisch aktive Schicht im Falle einer sauren PEM-Elektrolysezelle geeignet.

Für eine alkalische Elektrolysezelle eignen sich anodenseitig zur Erzeugung des Sauerstoffs (OER) insbesondere Nickellegierungen, beispielsweise NiFe, Ni, Raney-Ni, Ni-Aluminium-Legierungen, NiMn-Legierungen oder auch Raney-Nickel-Aluminum. Es können beispielsweise aber auch andere Verbindungen wie CuₓCoₓOₓ oder IrOₓ eingesetzt werden.

In einer bevorzugten Ausführungsform umfasst eine (anodenseitige) katalytisch aktive Schicht ein katalytisch aktives Material umfassend eine Nickellegierung, bevorzugt NiFe, Ni, Raney-Ni, Ni-Aluminium-Legierungen und/oder NiMn-Legierungen.

Die vorgenannten Materialien sind insbesondere für eine anodenseitige katalytisch aktive Schicht im Falle einer alkalischen Elektrolysezelle geeignet.

Für eine alkalische Elektrolysezelle eignen sich kathodenseitig zur Erzeugung des Wasserstoffs (HER) insbesondere Platin-haltige Verbindungen, aber auch andere Verbindungen insbesondere auf Basis von Übergangsmetallen können bevorzugt sein. Auch nicht-edelmetallhaltige bzw. halbedelmetallhaltige Verbindungen wie z.B. Kupfer-Cobalt-Verbindungen (CuCoOx) oder NickelVerbindungen (z.B. Ni, Raney-Ni, Ni-Verbindungen, Ni-Mo) können bevorzugt sein.

In einer bevorzugten Ausführungsform umfasst eine (kathodenseitige) katalytisch aktive Schicht ein katalytisch aktives Material umfassend eine Platin-haltige Verbindung, besonders bevorzugt wird die Kathode von Platin auf Kohlenstoff gebildet.

Die vorgenannten Materialien sind insbesondere für eine kathodenseitige katalytisch aktive Schicht im Falle einer alkalischen Elektrolysezelle geeignet.

In bevorzugten Ausführungsformen der Erfindung liegt das katalytisch aktive Material der katalytisch aktiven Schichten in Form von Nanopartikeln vor. Bevorzugt umfassen die katalytisch aktiven Schichten Nanopartikel, welche aus den vorgenannten katalytisch aktiven Materialien bestehen.

Nanopartikel, welche aus katalytisch aktiven Materialien bestehen, werden auch als katalytisch aktive Nanopartikel bezeichnet.

Durch Auftragen einer zusätzlichen Zwischenschicht von Nanofasern, durch Mischung von katalytisch aktiven Nanopartikeln mit Nanofasern oder Einbringung von Nanofasern in die angrenzenden Transportschichten können deutliche Effizienz und Stabilitätssteigerungen erzielt werden.

Die Transportschichten bezeichnen bevorzugt die Schichten der Elektrolysezelle, über welche Wasser zugeführt, sowie Gase (Sauerstoff bzw. Wasserstoff) abtransportiert werden. Weiterhin dient die Transportschicht auch einer elektrischen Kontaktierung der katalytisch aktiven Schichten mit den Flussfeldern, beispielsweise Bipolarplatten im Falle eines Stacks.

In der Literatur werden die Transportschichten (porous transport layers PTL) auch als Gasdiffusionslagen (*gas diffusion layers* GDL oder liquid gas diffusion layers LGDL) oder Gas- bzw. Flussverteiler bezeichnet (*current distributors oder current collectors*). In bevorzugten Ausführungsformen sind die Transportschichten porös, d.h. durchlässig, sodass Flüssigkeiten (Wasser) oder Gase (Wasserstoff bzw. Sauerstoff) über Poren oder andere Durchgänge hindurch beweglich sind. In der Literatur werden die Transportschichten daher auch als *porous transport layer* (PTL) bezeichnet.

In einer bevorzugten Ausführungsform umfassen die kathodenseitigen Transportschichten kohlenstoffbasierte Materialien wie graphitiertes oder carbonisiertes Kohlefaserpapier, Kohlenstoff-Faser-Gelege, Kohlefaservlies, Kohlefasergewebe und/oder ähnliche Materialien.

Die vorgenannten Materialen eignen sich bevorzugt für kathodenseitigen Transportschichten sowohl für eine saure Elektrolysezelle (PEM) als auch für eine alkalische Elektrolysezelle. Für die alkalische Elektrolyszelle kann es auch bevorzugt sein Nickel einzusetzen.

In einer bevorzugten Ausführungsform umfassen die anodenseitigen Transportschichten nichtkohlenstoffbasierte Materialien wie Metallgewebe, Metallvliese, Netze, Metall-Stapelfasern, Metall-Multifilamente, Metallschaum und/oder andere poröse metallische Strukturen

Für alkalische Elektrolysezellen basieren die Transportschichten bevorzugt auf Nickel als Metall, beispielsweise kann als Transportschicht ein Nickelschaum oder andere poröse Nickelstruktur bevorzugt sein

Für saure Elektrolysezellen basieren die anodenseitigen Transportschichten bevorzugt auf Titan als Metall, beispielsweise kann als Transportschicht eine Titanvlies, ein Titansintermetall, eine Titanstreckgitter oder andere poröse Titanstrukturen bevorzugt sein.

Derartige Transportschichten sind insbesondere für Ausführungsformen bevorzugt, bei welchen zwischen einer der katalytisch aktiven Schichten und einer Transportschicht eine Zwischenschicht umfassend elektrisch leitfähige Nanofasern vorliegt oder wobei mindestens eine der katalytisch aktiven Schichten eine Mischung aus katalytisch aktiven Nanopartikeln und elektrisch leitfähigen Nanofasern umfasst. Aufgrund einer Erhöhung der Querleitfähigkeit führen die Nanofasern zu einer deutlich verbesserten elektrischen Kontaktierung der katalytisch aktiven Schicht mit den Transportschichten und mithin zu einer Effizienzsteigerung.

In weiteren bevorzugten Ausführungsformen umfasst die anodenseitige und/oder kathodenseitige Transportschicht elektrisch leitfähige Nanofasern. Die Transportschichten können hierbei grundsätzlich wie obig erläutert aufgebaut sein. D.h. für kathodenseitigen Transportschichten können beispielsweise kohlenstoffbasierte vorzugsweise poröse Materialien verwandt werden, während für anodenseitige Transportschichten beispielsweise metallische vorzugsweise poröse Materialien eingesetzt werden. Die Nanofasern können hierbei zusätzlich in die Transportschicht eingefügt werden, um die beschriebenen Vorteile insbesondere in Bezug auf eine Steigerung der Querleitfähigkeit zu erhalten.

Besonders bevorzugt ist es jedoch, dass die anodenseitige und/oder kathodenseitige Transportschicht im Wesentlichen aus Nanofasern bestehen, die Transportschichten mithin aus Nanofasern gebildet werden. Beispielsweise können anodenseitige Nanofasern auf Titanbasis bevorzugt sein, während kathodenseitige Transportschichten durch kohlenstoffbasierte Nanofasern gebildet werden.

In einer bevorzugten Ausführungsform der Erfindung werden elektrisch leitfähige Nanofasern aus einem nicht katalytisch aktiven Material gebildet. Bevorzugt bestehen die elektrisch leitfähigen Nanofasern mithin im Wesentlichen aus einem nicht katalytisch aktiven Material und weisen daher kein oder einen vernachlässigbar geringen Anteil an katalytisch-aktivem Material auf.

Nanofaser dieser Ausführungsform werden bevorzugt als nicht katalytische Nanofasern bezeichnet. Die nicht katalytischen Nanofasern zeichnen sich insbesondere durch eine Steigerung der Querleitfähigkeit aus, sodass das katalytisch aktive Material, beispielsweise in Form von katalytisch aktiven Nanopartikeln, optimal kontaktiert und mithin auch bei geringen Beladungen eine hohe Effizienz zeigt.

Die nicht katalytisch aktiven Nanofasern können sowohl als Zwischenschicht zwischen einer elektrisch aktiven Schicht und einer Transportschicht, in Mischform mit katalytisch aktiven Nanopartikeln oder aber für eine Transportschichten verwandt werden. Besonders bevorzugt ist die Verwendung von nicht katalytisch aktiven Nanofasern für die Transportschicht. Für eine Verwendung als Transportschicht sollten die Nanofasern mithin elektrisch leitfähig sein, aber nicht zwangsläufig katalytisch aktiv. Beispiele geeigneter Materialien umfassen TiN (Titannitrid), WC (Wolframcarbid) oder auch NbO (Nioboxid).

Es kann aber auch bevorzugt sein, dass die Nanofasern eine katalytische Aktivität aufweisen. Falls die Nanofasern einen Anteil katalytisch aktiven Edelmetalls enthalten, wird dieser bei der Bestimmung der (Edelmetall-)Beladung berücksichtigt. Die Angabe der Beladung bezieht sich somit immer auf die Gesamtmenge des katalytisch aktiven Materials, bevorzugt eines Edelmetalls.

In einer bevorzugten Ausführungsform werden die elektrisch leitfähigen Nanofasern aus einem katalytisch aktivem Material gebildet oder aus einem nicht katalytisch aktivem Material gebildet und mit einem katalytisch aktiven Material beschichtet. Die Ausführungsform der Nanofasern wird auch als katalytisch aktive Nanofasern bezeichnet. In der bevorzugten Ausführungsform bestehen die Nanofasern mithin bevorzugt aus einem katalytisch aktivem Material oder liegen mit einem solchen zusammen beschichtet vor.

In der Ausführungsform tragen die Nanofasern selbst zur anodenseitigen und/oder kathodenseitigen katalytischen Aktivität bei. Die Leistungssteigerung der Elektrolysezelle beruht in diesem Fall auf der Kombination der elektrisch sehr gut leitfähigen und stabilen Nanofasern, mit den durch die hohe Oberfläche sehr aktiven Nanopartikeln. Zudem bietet die Nanofaserschicht durch die hohe Porosität Effizienzvorteile in Bezug auf den Gastransport in der Katalysatorschicht.

Bevorzugt werden katalytisch aktive Nanofasern z.B. für eine Zwischenschicht zwischen Transportschicht und katalytisch aktiver Schicht (beispielsweise auf Basis katalytisch aktiver Nanopartikel) eingesetzt. Auch für die Bereitstellung einer gemischten katalytisch aktiven Schicht aus Nanopartikeln und Nanofasern ist die Verwendung katalytisch aktiver Nanofasern besonders bevorzugt.

Die Wahl geeigneter katalytisch aktiver Materialien kann davon abhängen, ob die Nanofasern anoden- oder kathodenseitig zum Einsatz kommen und ob es sich bevorzugt um eine alkalische Elektrolysezelle (AEM-Elektrolysezelle) oder um eine saure Elektrolysezelle (PEM-Elektrolysezelle) handelt.

Als katalytisch aktive Nanofasern für eine saure PEM-Elektrolyse (mit einer *proton exchange membrane* oder *polymer electrolyte membran* PEM) eignen sich beispielsweise IrO₂ und Iridium-haltige Verbindungen mit Ruthenium, Zinn, Antimon, Vanadium, Nickel, Cobalt, insbesondere IrRuOₓ (Iridium-Ruthenium-oxid), IrCoOₓ (Iridium-Cobalt-oxid), IrNiOₓ (Iridium-Nickel-oxid) oder IrSnSbVOₓ (Iridium-Zinn-Antimon-Vanadium-oxid).

Für eine saure PEM-Elektrolyse eignen sich als katalytisch nicht (bzw. geringfügig) aktive Nanofasern beispielsweise Ti (Titan), TiOₓ (Titanoxid)und dotiertes Nb:TiOₓ (Niob-Ttianoxid), ATO (Antimonzinnoxid), ITO (Indiumzinnoxid), TiN (Titannitrid), NbOₓ (Nioboxid), TaC (Tantalcarbid), HfC (Hafniumcarbid) und/oder WC (Wolframcarbid).

Als katalytisch aktive Nanofasern für eine alkalische AEM-Elektrolyse eignen sich bevorzugt Ir (Iridium), IrOₓ (Iridiumoxid), NiFeOx (Nickel-Eisen-oxid), CuₓCoₓOₓ (Kupfer-Cobalt-oxid), Ni (Nickel), Ni-Aluminium-Legierungen, NiMn (Nickel-Mangan)-Legierungen, Pt (Platinverbindungen) oder CeLaNi (Cer-Lanthan-Nickel).

Als katalytisch nicht (bzw. geringfügig) aktive Nanofasern für die alkalische AEM-Elektrolyse eignen sich beispielsweise Ti (Titan), TiOₓ (Titanoxid) und NiOₓ (Nickeloxid) aber auch ATO (Antimonzinnoxid), ITO (Indiumzinnoxid), TiN (Titannitrid), NbOₓ (Nioboxid), TaC (Tantalcarbid) oder auch HfC (Hafniumcarbid).

In einer bevorzugten Ausführungsform der Erfindung ist die Elektrolysezelle dadurch gekennzeichnet, dass die Elektrolysezelle eine saure Elektrolysezelle ist mit einer protonenleitfähigen Polymermembran und die Nanofasern aus einem katalytisch aktiven Material besteht und/oder mit einem katalytisch aktiven Material beschichtet sind, bevorzugt aus Iridium (Ir) oder Iridumoxid (IrO₂) Verbindungen, besonders bevorzugt aus Iridium (Ir) oder Iridumoxid (IrO₂) Verbindungen zusammen mit Ruthenium, Zinn, Antimon, Vanadium, Nickel, Cobalt, ganz besonders bevorzugt Verbindungen ausgewählt aus der Gruppe bestehend aus IrRuOₓ (Iridium-Ruthenium-oxid), IrCoOₓ (Iridium-Cobalt-oxid), IrNiOₓ (Iridium-Nickel-oxid) oder IrSnSbVOₓ (Iridium-Zinn-Antimon-Vanadium-oxid).

In einer bevorzugten Ausführungsform der Erfindung ist die Elektrolysezelle dadurch gekennzeichnet, dass die Elektrolysezelle eine saure Elektrolysezelle ist mit einer protonenleifähigen Polymermembran und die Nanofasern aus einem katalytisch nicht aktiven Material bestehen, bevorzugt aus Titan (Ti), Titanoxid (TiOₓ) oder Niob (Nb) haltigen Verbindung, besonders bevorzugt ausgewählt aus der Gruppe bestehend aus TiOₓ (Titanoxid), ATO (Antimonzinnoxid), ITO (Indiumzinnoxid), NbOₓ (Nioboxid) oder aus TaC (Tantalcarbid) HfC (Hafniumcarbid) und/oder WC (Wolframcarbid).

In einer bevorzugten Ausführungsform der Erfindung ist die Elektrolysezelle dadurch gekennzeichnet, dass diese eine alkalische Elektrolysezelle ist mit einer für Hydroxidionen (OH⁻) durchlässigen Polymermembran und die Nanofasern aus einem katalytisch aktiven Material bestehen, bevorzugt ausgewählt aus der Gruppe bestehend aus bevorzugt IrOₓ (Iridiumoxid), NiFeOx (Nickel-Eisen-oxid), CuₓCoₓOₓ (Kupfer-Cobalt-oxid), Ni (Nickel), Ni-Aluminium-Legierungen, NiMn (Nickel-Mangan)-Legierungen, Pt(Platinverbindungen) oder CeLaNi (Cer-Lanthan-Nickel).

In einer bevorzugten Ausführungsform der Erfindung ist die Elektrolysezelle dadurch gekennzeichnet, dass diese eine alkalische Elektrolysezelle ist mit einer für Hydroxidionen (OH⁻) durchlässigen Polymermembran und die Nanofasern aus einem nicht katalytisch aktiven Material bestehen, bevorzugt aus Titanoxid- oder Nickeloxidhaltigen Verbindungen, besonders bevorzugt aus TiOₓ (Titanoxid) und/oder NiOₓ (Nickeloxid) aber auch ATO (Antimonzinnoxid), ITO (Indiumzinnoxid), TiN (Titannitrid), NbOₓ (Nioboxid), TaC (Tantalcarbid) oder auch HfC (Hafniumcarbid).

Elektrolysezellen, welche sich für eine alkalische Elektrolyse bzw. eine saure Elektrolyse eignen, unterscheiden sich insbesondere im Hinblick auf die Wahl der Polymermembran.

Polymermembran bezeichnet im Sinne der Erfindung bevorzugt eine Membran aus Polymermaterialien, wobei die Membran bevorzugt ionenleitend ist.

Für eine alkalische Elektrolyse ist die Polymermembran bevorzugt anionenleitend, während die Polymermembrane für eine saure Elektrolyse bevorzugt protonenleitend ist. Für Sauerstoff bzw. Wasserstoff sind die Polymembranen jedoch undurchlässig, sodass die Reaktionsräume effektiv getrennt werden.

Die Begriffe anionenleitend, anionleitfähige oder Anionen durchlässig werden bevorzugt synonym verwandt. Ebenso kennzeichnen, die Begriffe protonenleitend, protonenleitfähige oder Protonen durchlässig dieselbe Eigenschaft der Membran und zwar deren Fähigkeit spezifisch Protonen zu leiten bzw. passieren zu lassen.

Typische Membrandicken variieren von etwa 50 µm bis 500 µm, bevorzugt etwa 100µm bis 200µm, wodurch ein niedriger ohmscher Abfall, eine hohe mechanische Stabilität und Gasundurchlässigkeit erreicht wird.

In einer bevorzugten Ausführungsform der Erfindung ist die Elektrolysezelle dadurch gekennzeichnet, dass die Polymermembran aus einem protonenleitfähigen Polymer, beispielsweise aus einem Perfluorsulfonsäure (PFSA) Polymer, besteht und die Elektrolysezelle für eine saure Elektrolyse konfiguriert ist.

Für protonenleitende Polymermembranen können in der Regel Polymere mit mehreren kovalent gebundenen negativ geladenen Gruppen verwendet werden, während anionenleitende Membranen im Allgemeinen Polymere mit mehreren kovalent gebundenen positiv geladenen Gruppen umfassen.

Als protonenleitenden Polymermaterialien können bevorzugt perfluorsulfatische Säure (PFSA)-Polymere eingesetzt werden, beispielsweise kann ein Tetrafluorethylen-Fluor-vinylether-Copolymer mit Sulfonsäuregruppen für eine protononleitende PFSA-Membran verwendet werden. Dieses Material wird unter dem Handelsnamen Nafion^{®} von DuPont vertrieben. Auch andere Anbieter bieten PFSA-Membranen an z.B. 3M unter dem Produktnamen '3M', die AsahiGlassCooperation AGC unter 'Flemion'^{®}, AsahiKasai unter 'Aciplex'^{®} oder Solvay unter Aquivion^{®}

Es sind jedoch auch andere, insbesondere fluorfreie Ionomermaterialien, wie dotierte sulfonierte Polyetherketone oder dotierte sulfonierte oder sulfinierte Arylketone sowie dotierte Polybenzimidazole einsetzbar. Kompositmembranen, verstärkte Membranen, keramische Membranen sowie mehrschichtige Membranmaterialien können ebenfalls verwendet werden.

In einer weiteren bevorzugten Ausführungsform ist die Elektrolysezelle dadurch gekennzeichnet, dass die Polymermembran aus einem anionenleitfähigen Polymer, beispielsweise aus Hexamethyl-p-terphenyl poly(benzimidazolium), besteht und die Elektrolysezelle für eine alkalische Elektrolyse konfiguriert ist.

Im Stand der Technik sind anionenleitfähige Polymembranen für die alkalische Elektrolyse bekannt und werden auch als *anion exchange membrane* AEM bzw. genauer *anion exchange membrane for water electrolysis* AEMWE bezeichnet.

Beispielsweise sind Polysulfone(PSF)-basierte AEMs, Polyphenylenoxid (PPO) -basierte AEMs oder auch Polybenzimidazol basierte AEMs bekannt und können in einer Elektrolysezelle verwandt werden (vgl. Cho et al. A Review on Membranes and Catalysts for Anion Exchange Membrane Water Electrolysis Single Cells, J. Electrochem. Sci. Technol., 2017, 8(3), 183-196).

In einer bevorzugten Ausführungsform der Erfindung ist Elektrolysezelle dadurch gekennzeichnet, dass das Schichtsystem folgende Schichten umfasst:
- eine kathodennahe Transportschicht
- eine erste (kathodenseitige) katalytisch aktive Schicht
- eine Polymermembran
- eine zweite (anodenseitige) katalytisch aktive Schicht sowie
- eine anodennahe Transportschicht
wobei zwischen der ersten katalytisch aktiven Schicht und der kathodennahen Transportschicht und/oder zwischen der zweiten katalytisch aktiven Schichten und der anodennahen Transportschicht eine Zwischenschicht vorliegt, umfassend elektrisch leitfähige, bevorzugt keramische oder metallische, Nanofasern.

Hierbei ist es besonders bevorzugt, dass die Zwischenschicht von Nanofasern auf Basis von Iridiumoxidhaltigen Verbindungen gebildet wird, wobei es sich besonders um IrOx, IrRuOx und/oder IrNiOx Nanofasern handelt. Bevorzugt liegt die Zwischenschicht anodenseitig vor.

Alternativ kann es bevorzugt sein, dass eine katalytisch aktive Schicht, bevorzugt eine anodenseitige katalytisch aktive Schicht katalytisch aktive Nanopartikel und Nanofasern bevorzugt jeweils auf Basis von Iridiumoxidhaltigen Verbindungen umfasst, wobei es sich besonders bevorzugt um IrOx, IrRuOx und/oder IrNiOx Verbindungen handelt.

In bevorzugten Ausführungsformen der Erfindung erfolgt eine Anordnung der Elektrolysezelle als Mehrfachzellen bzw. Stack.

Die Erfindung betrifft somit auch einen Elektrolysezellen-Stack mit einer Vielzahl der beschriebenen Elektrolysezellen, welche übereinander und/oder nebeneinander gestapelt vorliegen. Zwischen den einzelnen Elektrolysezellen können bevorzugt Bipolarplatten angeordnete werden. Eine Kontaktierung kann über Endplatten erfolgen, sodass die Bipolarplatten als Flussfelder dienen.

Eine Vielzahl von Elektrolysezellen für einen Stack meint bevorzugt mindestens drei, mehr bevorzugt mindestens 5, 10, 20, 50, 100, 150, 200, 300 oder mehr Elektrolysezellen.

Die Erfindung betrifft weiterhin eine Verwendung einer beschriebenen Elektrolysezelle oder eines Elektrolysezellen-Stack zur Gewinnung von Wasserstoff und Sauerstoff aus Wasser unter Bereitstellung elektrischer Energie.

In einem weiteren Aspekt betrifft die Erfindung zudem Verfahren zur Herstellung einer Elektrolysezelle umfassend folgende Schritte
a. Bereitstellung einer Polymermembran
b. Auftragen eines Paars katalytisch aktiver Schichten umfasst, welche die Polymembran einfassen, wobei bevorzugt das Paar katalytisch aktiver Schichten katalytisch aktive Nanopartikel umfasst
c. Bereitstellung einer anodennahen und/oder eine kathodennahen Transportschicht,

dadurch gekennzeichnet, dass das Verfahren eine Bereitstellung metallischen oder keramischen Nanofasern zur Erhöhung einer Querleitfähigkeit bzw. Verbesserung einer Kontaktierung der katalytisch aktiven Nanopartikel umfasst, wobei
i) die metallischen oder keramischen leitfähigen Nanofasern als eine zusätzliche Zwischenschicht auf eine oder beide katalytisch aktive Schichten aufgetragen werden oder
ii) das Auftragen der katalytisch aktiven Schicht ein Auftragen einer Mischung von katalytisch aktiven Nanopartikeln und metallischen oder keramischen Nanofasern umfasst

und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht werden.

Bevorzugt erfolgt das Verfahren in der genannten Reihenfolge. D.h. zunächst erfolgt eine Bereitstellung einer Polymermembran und im Anschluss werden die katalytisch aktiven Schichten, ggf. eine Zwischenschicht aus Nanofasern aufgetragen, und im Anschluss mit den anoden- sowie kathodenseitigen Transportschichten in einer Elektrolysezelle bzw. in einem Zellstapel zusammengefügt.

Es kann aber auch bevorzugt sein eine andere Reihenfolge zur Herstellung zu wählen.

In einem weiteren Aspekt betrifft die Erfindung mithin ein Verfahren zur Herstellung einer Elektrolysezelle umfassend folgende Schritte
a. Bereitstellung einer anodennahen oder einer kathodennahen Transportschicht
b. Auftragen einer katalytisch aktiven Schicht auf die anodennahe oder kathodennahe Transportschicht, wobei bevorzugt das Paar katalytisch aktiver Schichten katalytisch aktive Nanopartikel umfasst
c. Auftragen einer Polymermembran auf die katalytisch aktive Schicht,
dadurch gekennzeichnet, dass das Verfahren eine Bereitstellung von metallischen oder keramischen Nanofasern zur Erhöhung einer Querleitfähigkeit bzw. Verbesserung einer Kontaktierung der katalytisch aktiven Nanopartikel umfasst, wobei
i) die metallischen oder keramischen Nanofasern als eine zusätzliche Zwischenschicht auf die Transportschicht aufgetragen werden oder
ii) das Auftragen der katalytisch aktiven Schicht ein Auftragen einer Mischung von katalytisch aktiven Nanopartikeln und metallischen oder keramischen Nanofasern Nanofasern umfasst

und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht werden

Für das genannte Verfahren beginnt mithin die Herstellung der Elektrolysezelle bevorzugt mit einer Transportschicht auf welche ggf. eine Zwischenschicht aus Nanofasern, eine katalytisch aktive Schicht und eine Polymermembran aufgetragen werden. Ein Fachmann erkennt, dass das Verfahren gleichermaßen von einer anodenseitigen oder kathodenseitigen Transportschicht begonnen werden kann und bevorzugt entsprechend fortgeführt wird, um den kathodenseitigen oder anodenseitigen Schichtaufbau zu ergänzen, sodass eine Elektrolysezelle mit zwei Transportschichten bzw. zwei katalytisch aktiver Schichten erhalten wird.

Ein Fachmann erkennt, dass bevorzugte Ausführungsformen und Vorteile, welche im Zusammenhang mit der Elektrolysezelle offenbart wurden, sich gleichermaßen auf den beanspruchten Stack sowie auf die Verwendung de Elektrolysezelle bzw. Verfahren zu deren Herstellung übertragen.

In einer bevorzugten Ausführungsform des Verfahrens erfolgt die Bereitstellung der Nanofasern mittels eines Spinnprozess, bevorzugt einem Elektrospinning-Verfahren, einem zentrifugalen Spinning-Verfahren und/oder einem Solution-Blow-Spinning-Verfahren.

In einer weiteren bevorzugten Ausführungsform des Verfahren erfolgt das Auftragen einer Schicht umfassend die Nanofasern mittels Aufsprühen, thermischen Spritzen, bevorzugt einem Plasmaspritzen oder Vakuumplasmaspritzen, Sprühbeschichtung, Schlitzdüse, Rolle-zu-Rolle-Anlage, Rakeln und/oder Dropcasting.

In einer besonders bevorzugten Ausführungsform werden die metallischen oder keramischen Nanofasern mittels eines Spinnprozess als ein zusammenhängendes Netz von Nanofasern hergestellt, thermisch nachbehandelt, zur weiteren Prozessierung als Dispersion zerkleinert und im Anschluss mittels eines Beschichtungsprozess, vorzugsweise mittels Sprühbeschichtung, aufgetragen werden. Besonders bevorzugt weisen die Nanofasern einen Durchmesser von weniger als 1000 nm und eine Länge von weniger als 20 µm, bevorzugt weniger als 10 µm auf und werden in einem Beschichtungsprozess, vorzugsweise als Dispersion zusammen mit einem Bindepolymer. Die Begriffe "umfassen" und "beinhalten" oder grammatikalische Varianten sind als Spezifizierung der angegebenen Merkmale, zu verstehen, schließen aber nicht das Hinzufügen eines oder mehrerer zusätzlicher Merkmale aus. Diese Begriffe umfassen die Begriffe "bestehend aus" und "bestehend im Wesentlichen aus". Die Begriffe "umfassend"/"einschließend"/"enthaltend" bedeuten also, dass jede weitere Komponente vorhanden sein kann. Der Begriff "bestehend aus" bedeutet, dass keine weitere Komponente vorhanden ist. Der Begriff "im Wesentlichen bestehend aus" oder grammatikalischen Varianten davon, schließt aber nicht grundsätzlich die Hinzufügung eines oder mehrerer zusätzlicher Merkmale, aus, sondern nur dann, wenn die zusätzlichen Merkmale die grundlegenden und neuen Eigenschaften der beanspruchten Vorrichtung oder des Verfahrens nicht wesentlich verändern.

### DETAILLIERTE BESCHREIBUNG

Die Erfindung soll im Folgenden unter Verweis auf weitere Abbildungen und Beispiele erläutert werden. Die Beispiele und Abbildungen dienen der Illustration bevorzugter Ausführungsform der Erfindung ohne diese zu beschränken.

### Beschreibung der Abbildungen

- **Abb. 1**: Schematische Illustration des Aufbaus und Funktionsweise einer Elektrolysezelle: Links: saure Elektrolyse, rechts: alkalische Elektrolyse
- **Abb. 2**: Elektronenpfadwege von der porösen Transportschicht zur Katalysatorschicht in einer PEM-Wasserelektrolysezelle. Bei hoher Katalysatorbeladung wird ein Elektronentransport in der Ebene durch eine vergleichsweise dicke katalytische Schicht (CL, links) ermöglicht. Die Katalysatorschicht besteht im Wesentlichen aus katalytisch aktiven Nanopartikeln. Bei geringer Ladung mit katalytisch aktivem Material erhöht sich der elektrische Widerstand in der Ebene und einige Teile der katalytischen Schicht (CL) verlieren die elektrische Verbindung, wodurch sich die aktive Oberfläche verringert (Mitte). Beispielsweise können sich Cluster von Nanopartikeln bilden, welche nicht mehr mit der Transportschicht kontaktiert sind. In einer bevorzugten Variante der Erfindung wird eine Zwischenschicht mit Nanofasern eingebracht, die die Querleitfähigkeit erhöht und die gesamte katalytische Schicht (CL) kontaktiert (rechts).
- **Abb. 3**: Verschiedene Konfiguration (1 bis 3) zur bevorzugten Verwendung der elektrisch leitfähigen Nanofasern in einem Schichtsystem einer Elektrolysezelle. Konfiguration 1 zeigt eine bevorzugte Ausführungsform, in welcher die elektrisch leitfähigen Nanofasern eine Zwischenschicht zwischen einer katalytisch aktiven Schicht und einer Transportschicht bilden. Konfiguration 2 illustriert eine bevorzugte Ausführungsform, in welcher eine Transportschicht elektrisch leitfähige Nanofasern umfasst. In der schematischen Ansicht wird die besonders bevorzugte Ausführungsform illustriert, in welcher die Transportschicht im Wesentlichen aus Nanofasern besteht. Konfiguration 3 zeigt eine bevorzugte Ausführungsform, in welcher eine der katalytisch aktiven Schichten eine Mischung aus katalytisch aktiven Nanopartikeln und Nanofasern umfasst.
- **Abb. 4**: A: Rasterelektronenmikroskopie-Aufnahmen der PVA/Iridium(III)chlorid-Nanofasern, B: Rasterelektronenmikroskopie-Aufnahmen der Iridium(IV)oxid-Nanofasern.
- **Abb. 5**: Schichtwiderstand einer Probe von IrOx-Nanopartikeln im Vergleich zu einer Probe mit einer Zwischenschicht von IrOx-Nanofasern auf IrOx-Nanopartikeln gemessen in Umgebungsluft.
- **Abb. 6**: Messgraph 1: Messergebnisse für eine Spannungs-Stromdichte-Kurve der erfinderischen Elektrolysezellen im Vergleich zu den Referenzelektrolysezellen.
- **Abb. 7**: Messgraph 2: Messergebnisse für eine Widerstands-Stromdichte-Kurve der erfinderischen Elektrolysezellen im Vergleich zu den Referenzelektrolysezellen.
- **Abb. 8**: Messgraph 3: Messergebnisse für eine Widerstands-Stromdichte-Kurve der erfinderischen Elektrolysezellen im Vergleich zu Referenzelektrolysezellen vor und nach der Alterung durch beschleunigte Belastungstests.

### Beispiel - Verwendung von Iridium(IV)oxid-Nanofasern als zusätzliche Zwischenschicht (Konfiguration 1) und Verwendung einer Mischung aus Iridium(IV)oxid-Nanofasern und Iridium(IV)oxid-Nanopartikeln als Katalysatorschicht (Konfiguration 3).

Im Folgenden wird ein Versuch zur Konfiguration 1 der Abbildung 3 beschrieben, wobei Iridium(IV)oxid-Nanofasern als zusätzliche Zwischenschicht auf eine katalytisch aktiven Schicht aus Nanopartikeln aufgetragen wird. Dabei wurden kommerziell erhältliche Iridium(IV)oxid Partikel mittels Spraycoating anodenseitig auf eine kommerziell erhältliche halb CCM (Pt/C Kathode auf N115 Membran) gesprüht. In einem zweiten Schritt wurden IrOx Nanofasern aufgesprüht. Die so hergestellte Membran-Elektrodeneinheit (MEA) wurde anschließend in einem Elektrolysestand elektrochemisch charakterisiert und mit konventionell aufgebauten MEAs mit gleicher und signifikant höherer IrOx Beladung verglichen. Die gleiche Konfiguration kann auch auf noch aktivere Materialsysteme (z.B. IrRuOx, IrNiOx etc.) übertragen werden, um die Leistungsfähigkeit weiter zu erhöhen. Da der Versuch zunächst jedoch nur den Leistungsvorteil durch die geänderte Struktur demonstrieren soll, wurde IrOx als bewährtes Katalysatormaterial verwendet.

### Herstellung der Iridium(IV)oxid-Nanofasern

Polyvinylalkohol (PVA; *M*_{w} > 80.000 g/mol; 10.0 Gew.-%) und Iridium(III)chlorid-Hydrat (3.0 Gew.-%) wurden 24h bei 100°C in N,N-Dimethylacetamid gerührt. Der Elektrospinningprozess wurde in einer kontrollierten Umgebung von 30 % relativer Luftfeuchte und einer Temperatur von 30°C durchgeführt. Der Abstand zwischen Düse und Sammel- bzw. Gegenelektrode betrug 15 cm bei einer angelegten Spannung von 15 kV. Die PVA/IrCl₃-Lösung wurde mit einer Durchflussmenge von 100 µl/h durch eine Düse mit einem Durchmesser von 0.6 mm in das elektrische Feld injiziert. Die Nanofasern wurden auf einer PTFE-Folie abgeschieden, von der die Nanofasermatte nach erfolgreicher Herstellung der Nanofasern mittels Pinzette abgelöst werden konnte.

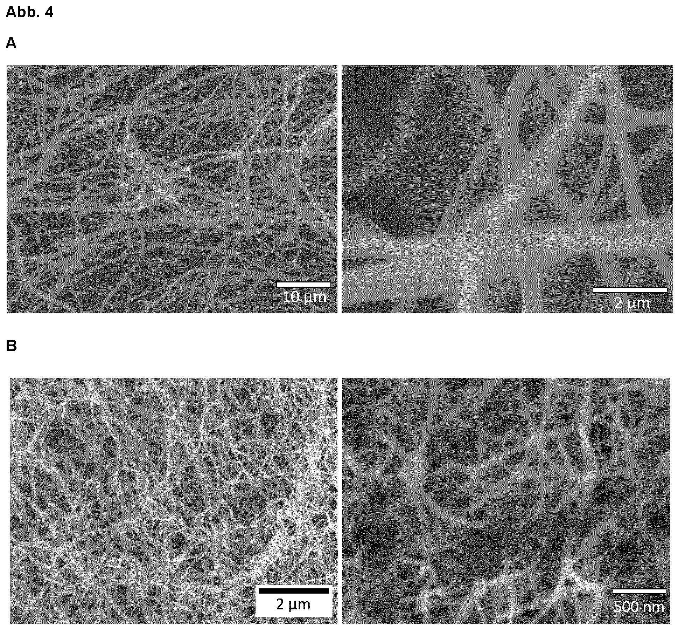

Abbildung 4A zeigt eine Rasterelektronenmikroskopie-Aufnahme der PVA/Iridium(III)chlorid-Nanofasern.

Die PVA/Iridium(III)chlorid Nanofasern wurden 4h im Ofen bei 350-500°C (Aufheizrate 1.3 K/min) an Luft thermisch nachbehandelt. Hierbei wurde sowohl das Trägerpolymer PVA zu flüchtigen Produkten (hauptsächlich CO₂ und H₂O) als auch Iridium(III)chlorid zu Iridium(IV)oxid oxidiert.

Abbildung 4B zeigt eine Rasterelektronenmikroskopie der so gewonnenen Iridium(IV)oxid-Nanofasern.

### Herstellung der Membran Elektroden Einheit (MEA)

Es wurden fünf Elektrolysezellen hergestellt, zwei Referenzen, welche anodenseitig, wie im Stand der Technik, üblich eine katalytisch aktive Schicht mit Nanopartikeln umfassen:
**Referenzprobe 1** - **NP 1.2 mg/cm²mit** Katalysatorbeladung von 1.2 mg/cm² IrOₓ (schwarz)
**Referenzprobe 2** - **NP 0.2 mg/cm²** mit Katalysatorbeladung von 0.2 mg/cm² IrOₓ (rot)

Zudem wurde als weitere Referenz eine Membran-Elektroden-Einheit mit ausschließlich IrOx Nanofasern als Katalysatormaterial in der Anode hergestellt.
**Referenzprobe 3** - **NF 0.2 mg/cm²** mit Katalysatorbeladung von 0.2 mg/cm² IrOx (blau)

Zudem wurde eine Elektrolysezelle gemäß Konfiguration 1 der Erfindung hergestellt, welche zusätzlich zu einer katalytisch aktiven Schicht mit Nanopartikeln eine Zwischenschicht mit IrOx Nanofasern umfasst:
**Erfinderische Probe** - **Konf 1** - **0.2 mg/cm²** mit Katalysatorbeladung von 0.2 mg/cm² IrOₓ (blau)

Zuletzt wurde eine Elektrolysezelle gemäß Konfiguration 3 der Erfindung hergestellt, welche in der katalytisch aktiven Schicht eine Mischung aus IrOₓ Nanopartikeln und IrOx Nanofasern umfasst:
**Erfinderische Probe** - **Konf 3** - **0.2 mg/cm²** mit Katalysatorbeladung von 0.2 mg/cm² IrOₓ (oliv)

Zunächst wurde eine Dispersion mit 1 % Iridium(IV)oxid, 0.4 % Nafion D520 Dispersion, 49.3 % Isopropanol und 49.3 % (jeweils Massenanteile) deionisiertem Wasser hergestellt. Die Dispersion wurden unmittelbar vor dem Sprühbeschichten 30 min. im Ultraschallbad behandelt.

Zur Herstellung der MEAs wurde die Dispersion mittels Sprühbeschichtung auf die Anodenseite auf einer 5 cm² mit 0.5 mg/cm² Pt/C Kathode und N115 Membran gesprüht. Für die **Referenzprobe 1** - **NP 1.2 mg/cm²** wurde 1.2 mg/cm² IrOₓ als Nanopartikel aufgesprüht, für die **Referenzprobe 2** - **NP 0.2 mg/cm²** wurde 0.2 mg/cm² IrOₓ als Nanopartikel aufgesprüht und für die **Erfinderische Probe** - **Konf 1 - 0.2 mg/cm²** wurden in diesem Schritt lediglich 0.1 mg/cm² IrOₓ als Nanopartikel aufgesprüht. Für die **Referenzprobe 3 - NF 0.2 mg/cm²** wurden auf die Membran keine IrOₓ-Nanopartikel aufgesprüht.

Für die **Erfinderische Probe - Konf 1** - **0.2 mg/cm² und Referenzprobe 3 - NF 0.2 mg/cm²** wurde eine weitere Dispersion mit 1 % zuvor hergestellten Iridium(IV)oxid-Nanofasern, 0.4 % Nafion D520 Dispersion, 49.3 % Isopropanol und 49.3 % (jeweils Massenanteile) deionisiertem Wasser hergestellt und unmittelbar vor dem Sprühbeschichten 30 min. im Ultraschallbad behandelt. Die Dispersion wurde dann im Fall der **Erfinderische Probe - Konf 1** - **0.2 mg/cm²** mittels Sprühbeschichtung auf die bereits bestehende Anode mit 0.1 mg/cm² IrOₓ aufgebracht, sodass sich eine Gesamtbeladung von 0.2 mg/cm² IrOₓ ergab. Im Fall der **Referenzprobe 3 - NF 0.2 mg/cm²** wurden in einem einzigen Sprühvorgang insgesamt 0.2 mg/cm² IrOₓ Nanofaserm aufgebracht. Für die **Erfinderische Probe - Konf 3** - **0.2 mg/cm²** wurde eine Dispersion mit 0.5 % Iridium(IV)oxid Nanopartikeln, 0.5 % Iridium(IV)oxid Nanofasern, 0.4 % Nafion D520 Dispersion, 49.3 % Isopropanol und 49.3 % (jeweils Massenanteile) deionisiertem Wasser hergestellt. Zur Herstellung der MEA wurden insgesamt 0.2 mg/cm² der Dispersion aufgesprüht. Alle Beladungen beziehen sich auf das reine Edelmetall.

Die MEAs lagen während des Sprühprozesses auf einer auf 90°C beheizten Platte. Dadurch verdampfen Isopropanol und Wasser zwischen den einzelnen Überfahrten, so dass eine poröse Schicht aus IrOx und Nafion entsteht.

### Messung der Schichtwiderstandes

Um zu bestimmen, in wie weit sich durch die Bereitstellung von Nanofasern die Querleitfähigkeit (*in-plane conductivity*) einer Schicht von Nanopartikel erhöht werden kann, wurde der Schichtwiderstand (*in plane resistivity*) für Katalysatorschichten von IrOx Nanopartikeln im Vergleich zu einer Kombination von IrOx Nanopartikeln mit IrOx Nanofasern bestimmt. Der Schichtwiderstand der Katalysatorschichten wurde durch eine Übertragung Linienmethode unter Verwendung eines ähnlichen Aufbaus gemessen wie in Ahadi et al. 2019 detaillierter erläutert (Ahadi, M.; Tam, M.; Stumper, J.; Bahrami, M. Electronic conductivity of catalyst layers of polymer electrolyte membrane fuel cells: Through-plane vs. in-plane. International Journal of Hydrogen Energy 2019, 44, 3603-3614.22).

Die Katalysatorschichten für die Messung des Schichtwiderstandes wurden mit einer Breite von 1 cm durch Sprühbeschichtung auf einem Isolierglassubstrat hergestellt. Bei einer Referenzprobe (IrOx NP, 0,2 mg_{IR}/cm²) wurden ausschließlich IrOx Nanopartikel mit einer Beladung von 0,2 mg_{IR}/cm² auf das Isolierglassubstrat aufgebracht. Bei einer erfinderischen Probe wurde zusätzlich zu einer Schicht aus IrOx Nanopartikel eine Zwischenschicht von IrOx Nanofasern aufgebracht (IrOx hybrid, 0,2 mg_{IR}/cm²). Anschließend wurde Kohlepapier mit einer mikroporösen Schicht (MPL) (Freudenberg H24C5) und einer Breite von 5 mm wurde mit 0,7 N, zuerst MPL-seitig, auf die Folie gepresst, um die gesamte Breite der Folie elektronisch zu kontaktieren. Der Widerstand wurde für Kontaktabstände von 1, 2, 3 und 4 cm bei Umgebungsbedingungen (25°C, 50 % RH) mit einem FLUKE 175 Multimeter gemessen. Durch Auftragen des Widerstands gegen den Abstand zwischen den Messpunkten und einem linearen Fit wurde der Folienwiderstand aus der Steigung bestimmt. Der elektrische Schichtwiderstand (*in plane resistivity*) kann somit als Rₛₕₑₑₜ = dR/dx - w definiert werden, wobei R der gemessene ohmsche Widerstand ist, w die Breite der Katalysatorschicht und x der Messabstand zwischen den Kontaktpunkten des Prüfmusters ist.

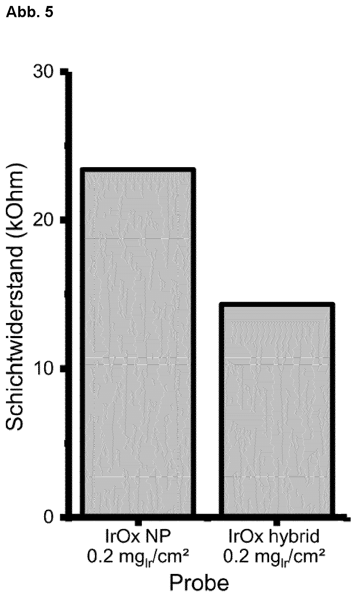

Wie in Abb. 5 ersichtlich, ist der Schichtwiderstand eine Katalysatorschicht, bei welcher zusätzlich zu den IrOx Nanopartikel eine Zwischenschicht von IrOx Nanofasern aufgebracht ist (IrOx hybrid, 0,2 mg_{IR}/cm²), deutlich niedriger als dies der Fall ist für eine Katalysatorschicht, welche ausschließlich aus Nanopartikeln besteht (IrOx NP, 0,2 mg_{IR}/cm²). Entsprechend ist die Querleitfähigkeit (*in plane conductivity*) unter Verwendung der IrOx Nanofasern höher.

### Elektrochemische Charakterisierung

Alle MEA-Tests wurden in einer Einfachzelle mit goldbeschichteten Titanflowfields durchgeführt. Kathodenseitig wurde eine Freudenberg H24C5 (30% Kompression) und anodenseitig eine Bekaert Ti Faser Transportschicht verwendet. Zum Einfahren der Zelle wurden vor Beginn der Messungen 15 Polarisationskurven von 1.4 bis 2.2 V gemessen. Um die Lebensdauer der erfinderischen Probe gegenüber den Referenzproben abzuschätzen wurden zusätzlich zu den Polarisationsmessungen beschleunigte Belastungstests (AST) durchgeführt. Dafür wurde ein Testprotokoll verwendet, welches die MEAs durch Beaufschlagen einer Wechselspannung innerhalb einer kurzen Zeitspanne ähnlich stark degradieren lässt, wie der reguläre Betrieb über einen deutlich längeren Zeitraum (Angewandte Chemie, International ed. in English, 56, 5994-6021, 2017). Nach 40000 AST Zyklen wurden erneut Polarisationsmessungen durchgeführt und mit Messungen der ungealterten Proben verglichen.

### Ergebnisse: Messdaten

Die Elektrolysezellen mit den nach Konfiguration 1 ("Elektrolysezelle-Konf-1") und Konfiguration 3 ("Elektrolysezelle-Konf-3") hergestellten Schichten werden nun mit Elektrolysezellen nach dem Stand der Technik ("Referenzproben 1-3") verglichen. In dem Graph bezeichnet die Y-Achse die Spannung in V (E_Stack) und die X-Achse die Stromdichte bzw. Strom pro Fläche in mA/cm² (I). Die Wasserstoffentstehungsrate ist proportional zur Stromdichte, d.h. je höher die Stromdichte, desto mehr Wasserstoff wird produziert. Je geringer die Spannung bei gleicher Stromdichte desto effizienter die Elektrolysezelle, da die einzusetzende Energie pro produzierter Wasserstoffmenge direkt proportional zur Spannung ist.

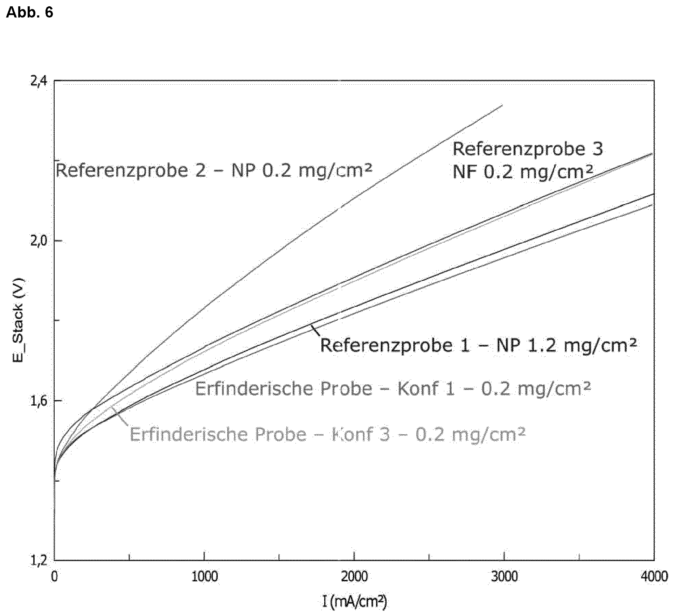

Aus Messgraph 1 der Spannungs-Stromdichte-Kurve (Abbildung 6) kann gefolgert werden:
1. Die *Referenzprobe 2 - NP 0.2 mg*/*cm²* hat eine höhere Zellspannung (und somit eine geringere Umwandlungseffizienz) als die *Referenzprobe 1 - NP 1.2 mg*/*cm².* Dies ist zu erwarten, da die Katalysatorbeladung deutlich verringert wurde.
2. Die *Referenzprobe 3 - NF 0.2 mg*/*cm²,* hat durch die bessere Anbindung des Katalysatormaterials bei höheren Stromdichten eine niedrigere Zellspannung als die *Referenzprobe 2 - NP 0.2 mg*/*cm². Bei niedriger Stromdichte zeigt sich jedoch der Nachteil der geringeren Katalysatoraktivität im Vergleich Referenzprobe 2 - NP 0.2 mg*/*cm². Hier ist die Überspannung der Referenzprobe 3 - NF 0.2 mg*/*cm² geringer als die der Referenzprobe 2 - NP 0.2 mg*/*cm².*
3. Die *Elektrolysezellen-Konf-1-0.2,* hingegen, kombiniert die Vorteile der Nanopartikel und Nanofasern und, hat trotz geringer Katalysatorbeladung eine vergleichbare Spannung wie die *Referenzprobe 1 - NP 1.2 mg*/*cm²* mit 6-facher Katalysatorbeladung.
4. Die *Elektrolysezellen-Konf-3-0.2,* kombiniert in ähnlicher Weise die Vorteile der Nanopartikel und Nanofasern hat jedoch in diesem Test eine höhere Spannung als die *Elektrolysezellen-Konf-1-0.2.*

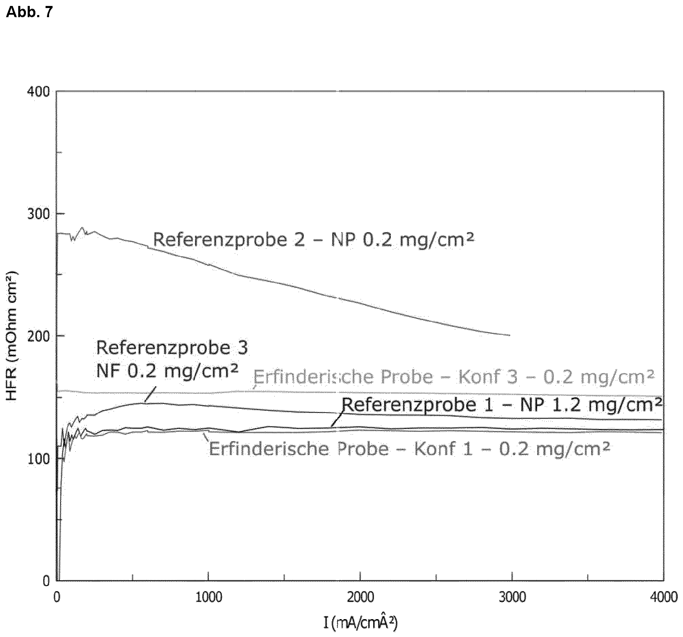

In einem weiteren Messgraph (Abbildung 7) wird der Hochfrequenz-Widerstand (engl. High frequency resistance - ,HFR') über die Stromdichte aufgetragen. Der Hochfrequenzwiderstand wurde durch in-situ Impedanzmessungen bei 1 kHz während der Polarisationsmessung bestimmt. Der HFR beinhaltet sowohl ionische als auch elektrische Widerstände in der Zelle. Für die gleichen Elektrolysezellen, kann aus dem Graph gefolgert werden:
1. Die *Referenzprobe 2 - NP 0.2 mg*/*cm²* hat einen höheren HFR als die *Referenzprobe 1 - NP 1.2 mg*/*cm².* Dies ist zu erwarten, da die Katalysatorbeladung deutlich verringert wurde.
2. Die *Elektrolysezellen-NF-0.2,* hat einen deutlich geringeren HFR als die *Referenzprobe 2 - NP 0.2 mg*/*cm².*
3. Die *Elektrolysezellen-Konf-1-0.2,* hat trotz geringer Katalysatorbeladung einen sehr geringen HFR, welcher mit die *Referenzprobe 1 - NP 1.2 mg*/*cm²* mit 6-facher Katalysatorbeladung vergleichbar ist.
4. Die *Elektrolysezellen-Konf-3-0.2,* erreicht einen deutlich niedrigeren HFR als die gleich beladene Referenzzelle nach dem Stand der Technik *(Referenzprobe 2 - NP 0.2 mg*/*cm²). Der HFR ist jedoch höher als der HFR der Elektrolysezellen-Konf-1-0.2,* der hochbeladenen *Referenzprobe 1 - NP 1.2 mg*/*cm² und geringfügig höher als der HFR der niedrigbeladenen reinen Nanofaserschicht.*

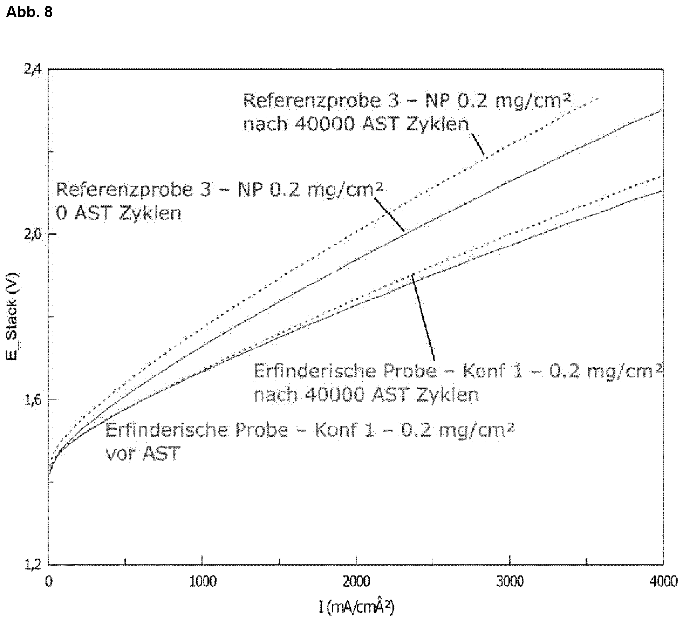

In einem weiteren Messgraph (Abbildung 8) werden die Polarisationskurven der *Referenzprobe 2 - NP 0.2 mg*/*cm²* und der erfinderischen *Elektrolysezellen-Konf-1-0.2* vor und nach der Alterung durch beschleunigten Belastungstests (AST) miteinander verglichen. Nach 40000 ASTs ist das Überpotential der *Elektrolysezellen-Konf-1-0.2 deutlich weniger erhöht, als das Überpotential der Referenzprobe 2 - NP 0.2 mg*/*cm².* Somit bleibt die Leistungsfähigkeit der *Elektrolysezellen-Konf-1-0.2 besser erhalten. Das geringere Überpotential deutet auf eine erhöhte Lebensdauer der erfinderischen Probe gegenüber den Referenzproben hin.*

Insgesamt zeigen die Messungen, dass sich unter Verwendung von Nanofasern, insbesondere in der Konfiguration 1 und 3, die Katalysatorbeladung deutlich verringern lässt, ohne dass sich die Zellspannung oder der HFR erhöhen. Das heißt, dass mittels der Verwendung von Nanofasern, beispielsweise als Zwischenschicht oder aber einer Mischung von Nanofasern und Nanopartikeln, Katalysatormaterial eingespart werden und gleichzeitig die Leistungsfähigkeit der Zelle erhöht werden kann. Die Ergebnisse der beschleunigten Belastungstests weisen auf eine erhöhte Lebensdauer der erfinderischen Elektrolysezellen hin.

### BEZUGSZEICHENLISTE

- 4: kathodenseitige Transportschicht
- 5: katalytisch aktive Schicht (kathodenseitig)
- 7: Polymermembran
- 9: katalytisch aktive Schicht (anodenseitig)
- 11: anodenseitige Transportschicht
- 13: Nanofasern
- 15: Nanopartikel

## Patentansprüche

1. Elektrolysezelle zur Erzeugung von Wasserstoff und Sauerstoff mit einem Schichtsystem umfassend mindestens ein Paar katalytisch aktiver Schichten zwischen welchen eine Polymermembran angeordnet vorliegt
**dadurch gekennzeichnet, dass**
das Schichtsystem folgende Schichten umfasst
- ein Paar katalytisch aktiver Schichten zur Bildung einer Anode und einer Kathode
- eine anodennahe und/oder eine kathodennahe Transportschicht,
wobei das Paar katalytisch aktiver Schichten katalytisch aktive Nanopartikel umfasst und wobei zur Verbesserung einer Kontaktierung der katalytisch aktiven Nanopartikel:
(i) zwischen einer der katalytisch aktiven Schichten und einer Transportschicht eine Zwischenschicht umfassend keramische oder metallische Nanofasern vorliegt oder
(ii) innerhalb einer der katalytisch aktiven Schichten zusätzlich zu den katalytisch aktiven Nanopartikeln keramische oder metallische Nanofasern vorliegen,
und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht wurden.

2. Elektrolysezelle gemäß dem vorherigen Anspruch
**dadurch gekennzeichnet, dass**
die Nanofasern elektrisch leitfähige keramische oder metallische Nanofasern sind, die Nanofasern einen Durchmesser von 50 nm - 400 nm aufweisen und/oder die Nanofasern ein Aspektverhältnis von 5 - 250, vorzugsweise 10-100 aufweisen.

3. Elektrolysezelle gemäß einem der vorherigen Ansprüche
**dadurch gekennzeichnet, dass**
die Nanofasern einen Durchmesser von weniger als 1000 nm und eine Länge von weniger als 20 µm, bevorzugt weniger als 10 µm aufweisen und in einem Beschichtungsprozess aufgetragen wurden, vorzugsweise als Dispersion zusammen mit einem Bindepolymer.

4. Elektrolysezelle gemäß einem der vorherigen Ansprüche
**dadurch gekennzeichnet, dass**
eine Beladung der katalytisch aktiven Schicht mit katalytisch aktiven Material in einem Bereich gewählt wurde, welcher bei Bereitstellung der metallischen oder keramischen Nanofaser eine ausreichende Querleitfähigkeit zum Betrieb der Elektrolysezelle gewährleistet und ohne Bereitstellung der metallischen oder keramischen Nanofasern keine ausreichende Querleitfähigkeit zum Betrieb der Elektrolysezelle gewährleistet.

5. Elektrolysezelle gemäß einem der vorherigen Ansprüche
**dadurch gekennzeichnet, dass**
die Polymermembran aus einem protonenleitfähigen Polymer, beispielsweise aus Perfluorsulfonsäure (PFSA), besteht und die Elektrolysezelle für eine saure Elektrolyse konfiguriert ist oder
die Polymermembran aus einem anionenleitfähigen Polymer, beispielsweise aus Hexamethyl-p-terphenyl poly(benzimidazolium), besteht und die Elektrolysezelle für eine alkalische Elektrolyse konfiguriert ist.

6. Elektrolysezelle gemäß einem der vorherigen Ansprüche
**dadurch gekennzeichnet, dass**
die Elektrolysezelle eine saure Elektrolysezelle ist mit einer protonenleitfähigen Polymermembran und die Nanofasern aus einem katalytisch aktiven Material besteht und/oder mit einem katalytisch aktiven Material beschichtet sind, bevorzugt aus Iridium (Ir) oder Iridiumoxid (IrO₂) Verbindungen, besonders bevorzugt aus Iridium (Ir) oder Iridiumoxid (IrO₂) Verbindungen zusammen mit Ruthenium, Zinn, Antimon, Vanadium, Nickel, Cobalt, ganz besonders bevorzugt Verbindungen ausgewählt aus der Gruppe bestehend aus IrRuOₓ (Iridium-Ruthenium-oxid), IrCoOₓ (Iridium-Cobalt-oxid), IrNiOₓ (Iridium-Nickel-oxid) und IrSnSbVOₓ (Iridium-Zinn-Antimon-Vanadium-oxid).

7. Elektrolysezelle gemäß einem der vorherigen Ansprüche 1-6
**dadurch gekennzeichnet, dass**
die Elektrolysezelle eine saure Elektrolysezelle ist mit einer protonenleifähigen Polymermembran und die Nanofasern aus einem katalytisch nicht aktiven Material bestehen, bevorzugt aus Titan (Ti), Titanoxid (TiOₓ) oder Niob (Nb) haltigen Verbindung, besonders bevorzugt ausgewählt aus der Gruppe bestehend aus TiOₓ (Titanoxid), ATO (Antimonzinnoxid), ITO (Indiumzinnoxid) und NbOₓ (Nioboxid) oder aus TaC (Tantalcarbid) HfC (Hafniumcarbid) und/oder WC (Wolframcarbid).

8. Elektrolysezelle gemäß einem der vorherigen Ansprüche 1-6
**dadurch gekennzeichnet, dass**
die Elektrolysezelle eine alkalische Elektrolysezelle ist mit einer für Hydroxidionen (OH⁻) durchlässigen Polymermembran und die Nanofasern aus einem katalytisch aktiven Material bestehen, bevorzugt ausgewählt aus der Gruppe bestehend aus bevorzugt IrOₓ (Iridiumoxid), NiFeOx (Nickel-Eisen-oxid), CuₓCoₓOₓ (Kupfer-Cobalt-oxid), Ni (Nickel), Ni-Aluminium-Legierungen, NiMn (Nickel-Mangan)-Legierungen, Pt (Platinverbindunge) oder CeLaNi (Cer-Lanthan-Nickel).

9. Elektrolysezelle gemäß einem der vorherigen Ansprüche 1-6
**dadurch gekennzeichnet, dass**
die Elektrolysezelle eine alkalische Elektrolysezelle ist mit einer für Hydroxidionen (OH⁻) durchlässigen Polymermembran und die Nanofasern aus einem nicht katalytisch aktiven Material bestehen, bevorzugt aus Titanoxid- oder Nickeloxidhaltigen Verbindungen, besonders bevorzugt aus TiOₓ (Titanoxid), NiOₓ (Nickeloxid), TiN (Titannitrid) oder NbOₓ (Nioboxid) und/oder ATO (Antimonzinnoxid), ITO (Indiumzinnoxid), TaC (Tantalcarbid) oder HfC (Hafniumcarbid).

10. Elektrolysezelle gemäß einem der vorherigen Ansprüche
**dadurch gekennzeichnet, dass** das Schichtsystem folgende Schichten umfasst:
- eine kathodennahe Transportschicht
- eine erste katalytisch aktive Schicht
- eine Polymermembran
- eine zweite katalytisch aktive Schicht sowie
- eine anodennahe Transportschicht
wobei zwischen der ersten katalytisch aktiven Schicht und der kathodennahen Transportschicht und/oder zwischen der zweiten katalytisch aktiven Schichten und der anodennahen Transportschicht eine Zwischenschicht vorliegt, umfassend keramische oder metallische Nanofasern wobei die Zwischenschicht bevorzugt von Nanofasern auf Basis von Iridiumoxidhaltigen Verbindungen gebildet werden, wobei es sich besonders um IrOx, IrRuOx und/oder IrNiOx Nanofasern handelt.

11. Elektrolysezellen-Stack umfassend eine Vielzahl von Elektrolysezellen gemäß einem der vorherigen Ansprüche, welche übereinander und/oder nebeneinander gestapelt vorliegen.

12. Verwendung einer Elektrolysezelle gemäß einem der vorherigen Ansprüche 1-10 zur Gewinnung von Wasserstoff und Sauerstoff aus Wasser unter Bereitstellung elektrischer Energie.

13. Verfahren zur Herstellung einer Elektrolysezelle gemäß einem der vorherigen Ansprüche 1-10 umfassend folgende Schritte
a. Bereitstellung einer Polymermembran
b. Auftragen eines Paar katalytisch aktiver Schichten, welche die Polymembran einfassen, wobei das Paar katalytisch aktiver Schicht katalytisch aktive Nanopartikel umfasst
c. Bereitstellung einer anodennahen und/oder einer kathodennahen Transportschicht,
**dadurch gekennzeichnet, dass**
das Verfahren eine Bereitstellung von keramischen oder metallischen Nanofasern zur Verbesserung einer elektrischen Kontaktierung der katalytisch aktiven Nanopartikel umfasst, wobei
(i) die keramischen oder metallischen Nanofasern als eine zusätzliche Zwischenschicht auf eine oder beide katalytisch aktive Schichten aufgetragen werden oder
(ii) das Auftragen der katalytisch aktiven Schichten ein Auftragen einer Mischung von katalytisch aktiven Nanopartikeln und keramischen oder metallischen Nanofasern umfasst
und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht werden.

14. Verfahren zur Herstellung einer Elektrolysezelle gemäß einem der vorherigen Ansprüche 1-10 umfassend folgende Schritte
a. Bereitstellung einer anodennahen oder einer kathodennahen Transportschicht
d. Auftragen einer katalytisch aktiven Schicht auf die anodennahe oder kathodennahe Transportschicht, wobei das Paar katalytisch aktiver Schicht katalytisch aktive Nanopartikel umfasst
b. Auftragen einer Polymermembran auf die katalytisch aktive Schicht,
**dadurch gekennzeichnet, dass**
das Verfahren eine Bereitstellung von keramischen und metallischen Nanofasern zur Verbesserung einer Kontaktierung der katalytisch aktiven Nanopartikel umfasst,
wobei
(i) die keramischen und metallischen Nanofasern als eine zusätzliche Zwischenschicht auf die Transportschicht aufgetragen werden, oder
(ii) das Auftragen der katalytisch aktiven Schicht ein Auftragen einer Mischung von katalytisch aktiven Nanopartikeln und keramischen oder metallischen Nanofasern umfasst
und wobei die Nanopartikel eine maximale Ausdehnung von 1 nm - 1000 nm und eine Sphärizität von mehr als 0,5 aufweisen und die Nanofasern einen Durchmesser von 10 nm - 1000 nm und Aspektverhältnis von 5-1000 aufweisen und
wobei die metallischen oder keramischen Nanofasern mittels eines Spinnprozesses als ein zusammenhängendes Netz von Nanofasern hergestellt, thermisch nachbehandelt, zur weiteren Prozessierung als Dispersion zerkleinert und im Anschluss mittels eines Beschichtungsprozess als Dispersion in das Schichtsystem eingebracht werden.

15. Verfahren gemäß einem der vorherigen Ansprüche 13 oder 14
**dadurch gekennzeichnet, dass**
die Nanofasern einen Durchmesser von weniger als 1000 nm und eine Länge von weniger als 20 µm, bevorzugt weniger als 10 µm aufweisen und in einem Beschichtungsprozess aufgetragen werden, vorzugsweise als Dispersion zusammen mit einem Bindepolymer.

## Claims

1. Electrolytic cell for generating hydrogen and oxygen with a layer system comprising at least one pair of catalytically active layers between which a polymer membrane is arranged
**characterized in that**
the layer system comprises the following layers
- a pair of catalytically active layers to form an anode and a cathode
- an anode-side transport layer and/or a cathode-side transport layer,
wherein the pair of catalytically active layers comprises catalytically active nanoparticles and wherein to improve connectivity of the catalytically active nanoparticles
(i) an intermediate layer comprising ceramic or metallic nanofibers is present between one of the catalytically active layers and a transport layer, or
(ii) wherein ceramic or metallic nanofibers are present within one of the catalytically active layers in addition to the catalytically active nanoparticles,
and wherein the nanoparticles exhibit a maximum dimension of 1 nm - 1000 nm and a sphericity of more than 0.5, and the nanofibers exhibit a diameter of 10 nm - 1000 nm and an aspect ratio of 5-1000, and
wherein the metallic or ceramic nanofibers are produced as a coherent network of nanofibers by means of a spinning process, thermally posttreated, comminuted as a dispersion for further processing and subsequently incorporated as a dispersion into the layer system by means of a coating process.

2. Electrolytic cell according to the preceding claim
**characterized in that**
the nanofibers are electrically conductive ceramic or metallic nanofibers, the nanofibers exhibit a diameter of 50 nm - 400 nm and/or the nanofibers exhibit an aspect ratio of 5-250, preferably 10-100.

3. Electrolytic cell according to one of the preceding claims
**characterized in that**
the nanofibers exhibit a diameter of less than 1000 nm and a length of less than 20 µm, preferably less than 10 µm, and have been applied in a coating process, preferably as a dispersion together with a binding polymer.

4. Electrolytic cell according to one of the preceding claims
**characterized in that**
a loading of the catalytically active layer with catalytically active material has been selected in a range which, when the metallic or ceramic nanofibers are provided, ensures sufficient in-plane conductivity for operation of the electrolytic cell and, without provision of the metallic or ceramic nanofibers, does not ensure sufficient in-plane conductivity for operation of the electrolytic cell.

5. Electrolytic cell according to one of the preceding claims
**characterized in that**
the polymer membrane consists of a proton-conductive polymer, for example perfluorosulfonic acid (PFSA), and the electrolytic cell is configured for acid electrolysis, or
the polymer membrane consists of an anion-conductive polymer, for example hexamethyl-p-terphenyl poly(benzimidazolium), and the electrolytic cell is configured for alkaline electrolysis.

6. Electrolytic cell according to one of the preceding claims
**characterized in that**
the electrolytic cell is an acidic electrolytic cell with a proton-conductive polymer membrane and the nanofibers consist of a catalytically active material and/or are coated with a catalytically active material, preferably iridium (Ir) or iridium oxide (IrO₂) compounds, particularly preferably iridium (Ir) or iridium oxide (IrO₂) compounds together with ruthenium, tin, antimony, vanadium, nickel, cobalt, most preferably compounds selected from the group consisting of IrRuOₓ (iridium-ruthenium oxide), IrCoOₓ (iridium-cobalt oxide), IrNiOₓ (iridium-nickel oxide) and IrSnSbVOₓ (iridium-tin-antimony-vanadium oxide).

7. Electrolytic cell according to one of the preceding claims
**characterized in that**
the electrolytic cell is an acidic electrolytic cell having a proton-conductive polymer membrane and the nanofibers consist of a catalytically non-active material, preferably a compound containing titanium (Ti), titanium oxide (TiOₓ) or niobium (Nb), particularly preferably selected from the group consisting of TiOₓ (titanium oxide), ATO (antimony tin oxide), ITO (indium tin oxide) and NbOₓ (niobium oxide) or of TaC (tantalum carbide), HfC (hafnium carbide) and/or WC (tungsten carbide).

8. Electrolytic cell according to one of the preceding claims
**characterized in that**
the electrolytic cell is an alkaline electrolytic cell having a polymer membrane permeable to hydroxide ions (OH⁻) and the nanofibers consist of a catalytically active material, preferably selected from the group consisting of preferably IrOₓ (iridium oxide), NiFeOx (nickel-iron oxide), CuₓCoₓOₓ (copper-cobalt oxide), Ni (nickel), Ni-aluminium alloys, NiMn (nickel-manganese) alloys, Pt (platinum compounds) or CeLaNi (cerium-lanthanum-nickel).

9. Electrolytic cell according to one of the preceding claims
**characterized in that**
the electrolytic cell is an alkaline electrolytic cell having a polymer membrane permeable to hydroxide ions (OH⁻) and the nanofibers consist of a non-catalytically active material, preferably of compounds containing titanium oxide or nickel oxide, particularly preferably TiOₓ (titanium oxide), NiOₓ (nickel oxide), TiN (titanium nitride) or NbOₓ (niobium oxide) and/or ATO (antimony tin oxide), ITO (indium tin oxide), TaC (tantalum carbide) or HfC (hafnium carbide).

10. Electrolytic cell according to one of the preceding claims
**characterized in that** the layer system comprises the following layers:
- a cathode-side transport layer
- a first catalytically active layer
- a polymer membrane
- a second catalytically active layer and
- an anode-side transport layer
wherein an intermediate layer comprising ceramic or metallic nanofibers is present between the first catalytically active layer and the cathode-side transport layer and/or between the second catalytically active layer and the anode-side transport layer, wherein the intermediate layer is preferably formed by nanofibers based on compounds containing iridium oxide, in particular IrOx, IrRuOx and/or IrNiOx nanofibers.

11. An electrolytic cell stack comprising a plurality of electrolytic cells according to one of the preceding claims, which are stacked on top of each other and/or side by side.

12. Use of an electrolytic cell according to one of the preceding claims 1-10 for producing hydrogen and oxygen from water while providing electrical energy.

13. A method of manufacturing an electrolytic cell according to one of the preceding claims 1-10, comprising the following steps
a. Provision of a polymer membrane
b. Application of a pair of catalytically active layers encapsulating the polymer membrane, the pair of catalytically active layers comprising catalytically active nanoparticles
c. Provision of an anode-side transport layerand/or a cathode-side transport layer,
**characterized in that**
the method comprises providing ceramic or metallic nanofibers to improve electrical connectivity of the catalytically active nanoparticles, wherein
(i) the ceramic or metallic nanofibers are applied as an additional intermediate layer onto one or both of the catalytically active layers,
or
(ii) the application of the catalytically active layers comprises applying a mixture of catalytically active nanoparticles and ceramic or metallic nanofibers and wherein the nanoparticles exhibit a maximum dimension of 1 nm - 1000 nm and a sphericity of more than 0.5, and the nanofibers exhibit a diameter of 10 nm - 1000 nm and an aspect ratio of 5-1000, and
wherein the metallic or ceramic nanofibers are produced as a coherent network of nanofibers by means of a spinning process, thermally posttreated, comminuted as a dispersion for further processing and subsequently incorporated as a dispersion into the layer system by means of a coating process.

14. A method of manufacturing an electrolytic cell according to one of the preceding claims 1-10, comprising the following steps
a. Provision of an anode-side transport layer or a cathode-side transport layer
d. Application of a catalytically active layer onto the anode-side or cathode-side transport layer, wherein the pair of catalytically active layers comprises catalytically active nanoparticles
b. Application of a polymer membrane onto the catalytically active layer,
**characterized in that**
the method comprises providing ceramic and metallic nanofibers to enhance connectivity of the catalytically active nanoparticles
(i) wherein the ceramic and metallic nanofibers are applied as an additional intermediate layer to the transport layer, or
(ii) wherein the application of the catalytically active layer comprises applying a mixture of catalytically active nanoparticles and ceramic or metallic nanofibers and wherein the nanoparticles exhibit a maximum dimension of 1 nm - 1000 nm and a sphericity of more than 0.5, and the nanofibers exhibit a diameter of 10 nm - 1000 nm and an aspect ratio of 5-1000, and
wherein the metallic or ceramic nanofibers are produced as a coherent network of nanofibers by means of a spinning process, thermally posttreated, comminuted as a dispersion for further processing and subsequently incorporated as a dispersion into the layer system by means of a coating process.

15. A method according to one of the preceding claims 13 or 14
**characterized in that**
the nanofibers exhibit a diameter of less than 1000 nm and a length of less than 20 µm, preferably less than 10 µm, and are applied in a coating process, preferably as a dispersion together with a binding polymer.

## Revendications

1. Cellule d'électrolyse pour la production d'hydrogène et d'oxygène avec un système de couches comprenant au moins une paire de couches catalytiquement actives entre lesquelles est disposée une membrane polymère
**caractérisée en ce que**
le système de décalage comprend les couches suivantes
- une paire de couches catalytiquement actives pour former une anode et une cathode
- une couche de transport proche de l'anode et/ou de la cathode, dans laquelle la paire de couches catalytiquement actives comprend des nanoparticules catalytiquement actives et dans laquelle, pour améliorer une mise en contact des nanoparticules catalytiquement actives :
(i) une couche intermédiaire comprenant des nanofibres céramiques ou métalliques est présente entre l'une des couches catalytiquement actives et une couche de transport ou
(ii) des nanofibres céramiques ou métalliques sont présentes dans l'une des couches catalytiquement actives en plus des nanoparticules catalytiquement actives,
et dans laquelle les nanoparticules présentent une extension maximale de 1 nm à 1000 nm et une sphéricité supérieure à 0,5 et les nanofibres présentent un diamètre de 10 nm à 1000 nm et un rapport d'aspect de 5 à 1000 et
dans laquelle les nanofibres métalliques ou céramiques ont été produites sous forme de réseau continu de nanofibres au moyen d'un procédé de filage, post-traitées thermiquement, broyées en dispersion pour un traitement ultérieur et introduites ultérieurement dans le système de couches sous forme de dispersion au moyen d'un procédé de revêtement.

2. Cellule d'électrolyse selon la revendication précédente
**caractérisée en ce que**
les nanofibres sont des nanofibres céramiques ou métalliques électriquement conductrices, les nanofibres présentent un diamètre de 50 nm à 400 nm et/ou les nanofibres présentent un rapport d'aspect de 5 à 250, de préférence de 10 à 100.

3. Cellule d'électrolyse selon l'une des revendications précédentes
**caractérisée en ce que**
les nanofibres présentent un diamètre inférieur à 1000 nm et une longueur inférieure à 20 µm, de préférence inférieure à 10 µm, et ont été appliquées dans un processus de revêtement, de préférence sous forme de dispersion avec un polymère liant.

4. Cellule d'électrolyse selon l'une des revendications précédentes
**caractérisée en ce**
**qu'**un dépôt de la couche catalytiquement active en matériau catalytiquement actif a été choisi dans une zone qui, lorsque la nanofibre métallique ou céramique est fournie, assure une conductivité transversale suffisante pour le fonctionnement de la cellule d'électrolyse, et qui, sans fourniture des nanofibres métalliques ou céramiques, n'assure aucune conductivité transversale suffisante pour le fonctionnement de la cellule d'électrolyse.

5. Cellule d'électrolyse selon l'une des revendications précédentes
**caractérisée en ce que**
la membrane polymère est constituée d'un polymère conducteur de protons, par exemple en acide perfluorosulfonique (PFSA), et la cellule d'électrolyse est configurée pour l'électrolyse acide ou
la membrane polymère est constituée d'un polymère conducteur d'anions, par exemple l'hexaméthyl-p-terphényl poly(benzimidazolium), et la cellule d'électrolyse est configurée pour l'électrolyse alcaline.

6. Cellule d'électrolyse selon l'une des revendications précédentes
**caractérisée en ce que**
la cellule d'électrolyse est une cellule d'électrolyse acide avec une membrane polymère conductrice de protons et les nanofibres sont constituées d'un matériau catalytiquement actif et/ou sont revêtues d'un matériau catalytiquement actif, de préférence de composés d'iridium (Ir) ou d'oxyde d'iridium (IrO₂), en particulier de préférence de composés d'iridium (Ir) ou d'oxyde d'iridium (IrO₂) associés au ruthénium, à l'étain, à l'antimoine, au vanadium, au nickel, au cobalt, de manière particulièrement préférée de composés choisis dans le groupe constitué de IrRuOₓ (oxyde d'iridium-ruthénium), IrCoOₓ (oxyde d'iridium-cobalt), IrNiOₓ (oxyde d'iridium-nickel) et IrSnSbVOₓ (oxyde d'iridium-étain-antimoine-vanadium).

7. Cellule d'électrolyse selon l'une des revendications 1 à 6
**caractérisée en ce que**
la cellule d'électrolyse est une cellule d'électrolyse acide avec une membrane polymère conductrice de protons et les nanofibres sont constituées d'un matériau catalytiquement inactif, de préférence un composé contenant du titane (Ti), de l'oxyde de titane (TiOₓ) ou du niobium (Nb), de manière particulièrement préférée choisi dans le groupe constitué de TiOₓ (oxyde de titane), d'ATO (oxyde d'antimoine-étain), d'ITO (oxyde d'indium-étain) et de NbOₓ (oxyde de niobium) ou constitué de TaC (carbure de tantale), de HfC (carbure d'hafnium) et/ou de WC (carbure de tungstène).

8. Cellule d'électrolyse selon l'une des revendications précédentes 1 ou 6
**caractérisée en ce que**
la cellule d'électrolyse est une cellule d'électrolyse alcaline avec une membrane polymère perméable aux ions hydroxyde (OH⁻) et les nanofibres sont constituées d'un matériau catalytiquement actif, de préférence choisi dans le groupe constitué de préférence de IrOₓ (oxyde d'iridium), de NiFeOx (oxyde de nickel-fer), de CuₓCoₓOₓ (oxyde de cuivre-cobalt), de Ni (nickel), des alliages Ni-aluminium, des alliages NiMn (nickel-manganèse), de Pt (composés de platine) ou de CeLaNi (cérium-lanthane-nickel).

9. Cellule d'électrolyse selon l'une des revendications précédentes 1 à 6
**caractérisée en ce que**
la cellule d'électrolyse est une cellule d'électrolyse alcaline avec une membrane polymère perméable aux ions hydroxyde (OH⁻) et les nanofibres sont constituées d'un matériau non catalytiquement actif, de préférence d'oxyde de titane ou de composés contenant de l'oxyde de nickel, de manière particulièrement préférée de TiOₓ (oxyde de titane), de NiOₓ (oxyde de nickel), de TiN (nitrure de titane) ou de NbOₓ (oxyde de niobium) et/ou d'ATO (oxyde d'antimoine-étain), d'ITO (oxyde d'indium-étain), de TaC (carbure de tantale) ou de HfC (carbure d'hafnium).

10. Cellule d'électrolyse selon l'une des revendications précédentes
**caractérisée en ce que** le système de couches comprend les couches suivantes :
- une couche de transport proche de la cathode
- une première couche catalytiquement active
- une membrane polymère
- une seconde couche catalytiquement active ainsi
- qu'une couche de transport près de la cathode
dans laquelle une couche intermédiaire est présente entre la première couche catalytiquement active et la couche de transport proche de la cathode et/ou entre la seconde couche catalytiquement active et la couche de transport proche de l'anode, comprenant des nanofibres céramiques ou métalliques, dans laquelle la couche intermédiaire est de préférence formée de nanofibres à base de composés contenant de l'oxyde d'iridium, qui sont notamment des nanofibres d'IrOx, d'IrRuOx et/ou d'IrNiOx.

11. Pile de cellules d'électrolyse comprenant une pluralité de cellules d'électrolyse selon l'une quelconque des revendications précédentes, qui sont empilées les unes sur les autres et/ou les unes à côté des autres.

12. Utilisation d'une cellule d'électrolyse selon l'une quelconque des revendications précédentes 1 à 10 pour produire de l'hydrogène et de l'oxygène à partir de l'eau tout en fournissant de l'énergie électrique.

13. Procédé de fabrication d'une cellule d'électrolyse selon l'une quelconque des revendications 1 à 10 précédentes, comprenant les étapes suivantes
a. Fourniture d'une membrane polymère
b. Application d'une paire de couches catalytiquement actives enrobant la polymembrane, dans lequel la paire de couches catalytiquement actives comprend des nanoparticules catalytiquement actives
c. Fourniture d'une couche de transport proche de l'anode et/ou proche de la cathode,
**caractérisé en ce que**
le procédé comprend la fourniture de nanofibres céramiques ou métalliques pour améliorer une mise en contact électrique des nanoparticules catalytiquement actives, dans lequel
(i) les nanofibres céramiques ou métalliques sont appliquées comme couche intermédiaire supplémentaire à une ou aux deux couches catalytiquement actives ou
(ii) l'application de la couche catalytiquement active comprend une application d'un mélange de nanoparticules catalytiquement actives et de nanofibres céramiques ou métalliques
et dans lequel les nanoparticules présentent une extension maximale de 1 nm à 1000 nm et une sphéricité supérieure à 0,5 et les nanofibres présentent un diamètre de 10 nm à 1000 nm et un rapport d'aspect de 5 à 1000 et
dans lequel les nanofibres métalliques ou céramiques ont été produites sous forme de réseau continu de nanofibres au moyen d'un procédé de filage, post-traitées thermiquement, broyées en dispersion pour un traitement ultérieur et introduites ultérieurement dans le système de couches sous forme de dispersion au moyen d'un procédé de revêtement.

14. Procédé de fabrication d'une cellule d'électrolyse selon l'une quelconque des revendications 1 à 10 précédentes, comprenant les étapes suivantes
a. Fourniture d'une couche de transport près de l'anode ou près de la cathode
d. Application d'une couche catalytiquement active à la couche de transport proche de l'anode ou de la cathode, dans lequel la paire de couches catalytiquement actives comprend des nanoparticules catalytiquement actives
b. Application d'une membrane polymère sur la couche catalytiquement active,
**caractérisé en ce que**
le procédé comprend une fourniture de nanofibres céramiques ou métalliques pour améliorer une mise en contact des nanoparticules catalytiquement actives, dans lequel
(i) les nanofibres céramiques ou métalliques sont appliquées comme couche intermédiaire supplémentaire à la couche de transport, ou
(ii) l'application des couches catalytiquement actives comprend une application d'un mélange de nanoparticules catalytiquement actives et de nanofibres céramiques ou métalliques
et dans lequel les nanoparticules présentent une extension maximale de 1 nm à 1000 nm et une sphéricité supérieure à 0,5 et les nanofibres présentent un diamètre de 10 nm à 1000 nm et un rapport d'aspect de 5 à 1000 et
dans lequel les nanofibres métalliques ou céramiques ont été produites sous forme de réseau continu de nanofibres au moyen d'un procédé de filage, post-traitées thermiquement, broyées en dispersion pour un traitement ultérieur et introduites ultérieurement dans le système de couches sous forme de dispersion au moyen d'un procédé de revêtement.

15. Procédé selon l'une des revendications précédentes 13 à 14 **caractérisé en ce que**
les nanofibres présentent un diamètre inférieur à 1000 nm et une longueur inférieure à 20 um, de préférence inférieure à 10 µm, et sont appliquées dans un processus de revêtement, de préférence sous forme de dispersion avec un polymère liant.
